# EUROPÄISCHE PATENTSCHRIFT

(11) **EP 1 391 474 B1**
(45) Veröffentlichungstag und Bekanntmachung des Hinweises auf die Patenterteilung: **17.10.2007**
(21) Anmeldenummer: 03018286.9
(22) Anmeldetag: 12.08.2003
(51) Int. Cl.: C08G 61/12, H01G 9/02

(54) **Substituierte Poly(alkylendioxythiophene) als Feststoffelektrolyte in Elektrolytkondensatoren**
Substituted polyalkylene dioxythiophene as solid state electrolyte in electrolyte capacitors
Polyalkylendioxythiophenes substitués comme électrolyte solide dans des condensateurs électrolytiques

(30) Priorität: 16.08.2002 DE 10237577
(43) Veröffentlichungstag der Anmeldung: 25.02.2004
(73) Patentinhaber: H.C. Starck GmbH, 38642 Goslar (DE)
(72) Erfinder: Merker, Udo, Dr., 50679 Köln (DE); Reuter, Knud, Dr., 47800 Krefeld (DE); Lerch, Klaus, Dr., 41564 Kaarst (DE)
(74) Vertreter: Clauswitz, Kai-Uwe Wolfram

(56) Entgegenhaltungen:
- EP-A- 0 340 512
- WO-A-00/60620
- NG S C ET AL: "SYNTHESIS AND CHARACTERIZATION OF ELECTRICALLY CONDUCTING COPOLYMERS OF ETHYLENEDIOXYTHIOPHENE AND 1,3-PROPYLENEDIOXYTHIOPHENE WITH OMEGA-FUNCTIONAL SUBSTITUENTS" JOURNAL OF MATERIALS SCIENCE LETTERS, CHAPMAN AND HALL, GB, Bd. 16, 1997, Seiten 809-811, XP001012692 ISSN: 0261-8028

## Beschreibung

Die Erfindung betrifft Elektrolytkondensatoren enthaltend speziell substituierte Poly(alkylendioxythiophene) als Feststoffelektrolyte und deren Herstellung sowie leitfähige Schichten aus speziell substituierten Poly(alkylendioxythiophenen), deren Herstellung und Verwendung.

Die Verbindungsklasse der π-konjugierten Polymere war in den letzten Jahrzehnten Gegenstand zahlreicher Veröffentlichungen. Sie werden auch als leitfähige Polymere oder als synthetische Metalle bezeichnet.

Leitfähige Polymere gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte π-konjugierte Polymere sind Polypyrrole, Polythiophene, Polyaniline, Polyacetylene, Polyphenylene und Poly(p-phenylen-vinylene).

Ein besonders wichtiges und technisch genutztes Polythiophen ist das Poly-3,4-(ethylen-1,2-dioxy)thiophen, oft auch als Poly(3,4-ethylendioxythiophen) bezeichnet, das in seiner oxidierten Form sehr hohe Leitfähigkeiten aufweist und beispielsweise in der EP-A 339 340 beschrieben ist. Eine Übersicht über zahlreiche Poly(alkylendioxythiophen)-Derivate, insbesondere Poly-(3,4-ethylendioxythiophen)-Derivate, deren Monomerbausteine, Synthesen und Anwendungen gibt L. Groenendaal, F. Jonas, D. Freitag, H. Pielartzik & J. R. Reynolds, Adv. Mater. 12 (2000) 481-494.

US-A 5,111,327 und US-A 5,187,608 beschreiben die Verwendung von substituierten Poly-(3,4-alkylendioxythiophenen) als elektroaktive Polymere, z.B. in elektrochromen Scheiben (smart windows). Blohm et al. zeigen, dass die Leitfähigkeit von chemisch oxidativ hergestellten Polymerschichten aus substituierten 3,4-Alkylendioxythiophenen durch nachfolgende elektrochemische Reduktion und darauffolgende elektrochemische Oxidation höher sind als entsprechend gehandhabte Schichten aus Poly(3,4-ethylendioxythiophen). Das elektrochemische Reduzieren und erneute Oxidieren bedeutet jedoch einen erheblichen Verfahrensaufwand.

WO-A-00/60620 beschreibt die Verwendung von einem Feststoffelektrolytkondensator mit Polythiophen wiederkehrenden Einheiten.

In der europäischen Patentschrift EP-A 340 512 wird die Herstellung eines Feststoffelektrolyten aus 3,4-Ethylen-1,2-dioxythiophen und die Verwendung seines durch oxidative Polymerisation hergestellten, kationischen Polymeren als Feststoffelektrolyt in Elektrolytkondensatoren beschrieben. Poly(3,4-ethylendioxythiophen) als Ersatz von Mangandioxid oder von Ladungstransferkomplexen in Feststoffelektrolytkondensatoren senkt aufgrund der höheren elektrischen Leitfähigkeit den äquivalenten Serienwiderstand des Kondensators und verbessert das Frequenzverhalten.

Der Reststrom eines solchen Kondensators hängt wesentlich von der Qualität des Polymerfilms ab: Dringt Graphit oder Silber durch den Polymerfilm und kommt dadurch in Kontakt mit dem Dielektrikum, so steigt der Reststrom drastisch an, da defekte Stellen in der Oxidschicht nicht mehr über die lokale Zerstörung des leitfähigen Polymers abgekapselt werden können (Selbstheilungseffekt).

Nach einer chemischen Polymerisation müssen gegebenenfalls die Salze, d.h. überschüssiges Oxidationsmittel sowie dessen reduzierte Form, herausgewaschen werden, um Schichten geeigneter Qualität zu erzielen. Andernfalls kann die Kristallisation der Salze im Laufe der Zeit zu einem erhöhten Serienwiderstand durch auftretende Kontaktwiderstände führen. Zudem können die Kristalle bei mechanischer Beanspruchung des Kondensators das Dielektrikum oder die äußeren Kontaktschichten beschädigen, so dass der Reststrom ansteigt. Es ist daher wünschenswert, die Kristallisation von Salzen des Oxidationsmittels sowie Restsalzen dessen reduzierter Form, die trotz Waschung noch im Kondensator verbleiben, zu unterdrücken.

Es bestand daher weiterhin Bedarf die Leitfähigkeit und Qualität, wie sie für Schichten aus Poly(3,4-ethylendioxythiophen) bekannt ist, insbesondere im Hinblick auf vorangehend beschriebenen Einsatz in Elektrolytkondensatoren zu erhöhen, um eine höhere Leistungsfähigkeit zu erzielen. Dabei ist es vor allem wünschenswert, den äquivalenten Serienwiderstand und den Reststrom von Feststoffelektrolytkondensatoren weiter zu senken. Außerdem ist eine einfache Herstellung der Schichten bzw. der Elektrolytkondensatoren wünschenswert.

Die Aufgabe bestand daher darin, geeignete elektrisch leitfähige Polymere bereitzustellen oder aufzufinden, welche sich zur Herstellung elektrisch leitfähiger Schichten und insbesondere als Feststoffelektrolyte in Elektrolytkondensatoren eignen, wobei Leitfähigkeit und Qualität, insbesondere was die bessere Bindung von Restsalzen und die Homogenität betrifft, im Vergleich zu bekannten Polymeren, wie beispielsweise Poly(3,4-ethylendioxythiophen), verbessert werden sollten.

Überraschend wurde nun gefunden, dass Polythiophene mit wiederkehrenden Einheiten der allgemeinen Formel (I), 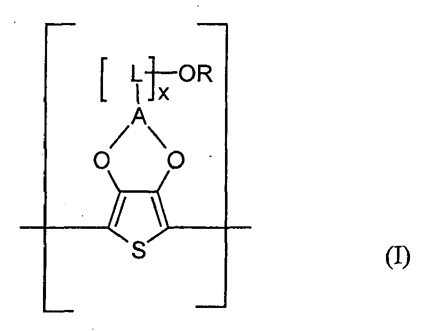 worin
- A: für einen C₁-C₅-Alkylenrest steht, der an beliebiger Stelle, gegebenenfalls über einen Linker L, durch eine Gruppe -OR substituiert ist und gegebenenfalls weitere Substituenten trägt,
- L: für eine Methylengruppe,
- x: für 0 oder eine ganze Zahl von 1 oder größer, bevorzugt für 0 oder eine ganze Zahl von 1 bis 6, besonders bevorzugt für 0 oder 1 steht,
- R: für H, gegebenenfalls zusätzlich durch SO₃H oder SO₃⁻, substituiertes C₁-C₁₈-Alkyl, C₇-C₁₈-Aralkyl, C₅-C₁₄-Aryl oder C₅-C₁₂-Cycloalkyl steht,
diese Anforderungen erfüllen.

Gegenstand der vorliegenden Erfindung ist daher ein Elektrolytkondensator enthaltend
- eine Schicht eines oxidierbaren Metalls
- eine Oxidschicht dieses Metalls
- einen Feststoffelektrolyten
- Kontakte
dadurch gekennzeichnet, dass er als Feststoffelektrolyt Polythiophene mit wiederkehrenden Einheiten der allgemeinen Formel (I) enthält, 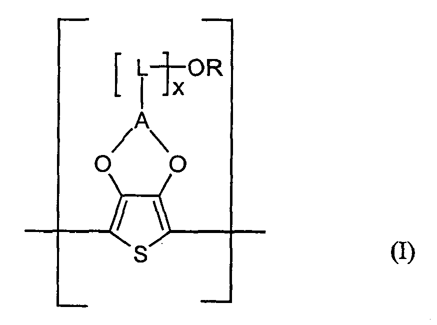 worin
- A: für einen C₁-C₅-Alkylenrest steht, der an beliebiger Stelle, gegebenenfalls über einen Linker L, durch eine Gruppe -OR substituiert ist und gegebenenfalls weitere Substituenten trägt,
- L: für eine Methylengruppe,
- x: für 0 oder eine ganze Zahl von 1 oder größer, bevorzugt für 0 oder eine ganze Zahl von 1 bis 6, besonders bevorzugt für 0 oder 1 steht und
- R: für H, gegebenenfalls zusätzlich durch SO₃H oder SO₃⁻ substituiertes C₁-C₁₈-Alkyl, C₇-C₁₈-Aralkyl, C₅-C₁₄-Aryl oder C₅-C₁₂-Cycloalkyl steht.

Bevorzugt ist dies ein Elektrolytkondensator der als Feststoffelektrolyt Polythiophene mit wiederkehrenden Einheiten der allgemeinen Formeln (I-a) und/oder (I-b) enthält, 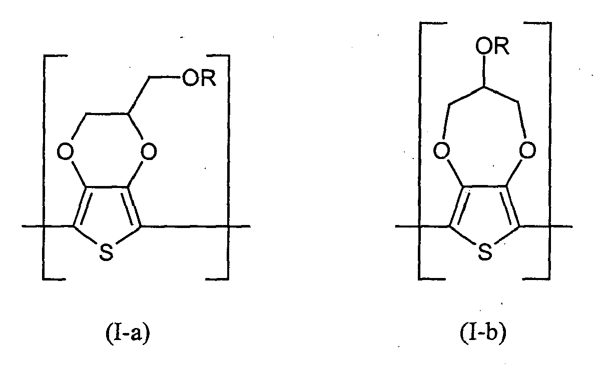 worin
- R: die oben für die allgemeine Formel (I) genannte Bedeutung hat.

Besonders bevorzugt ist dies ein Elektrolytkondensator der als Feststoffelektrolyt Polythiophene mit wiederkehrenden Einheiten der Formeln (I-a-1) und/oder (I-b-1) enthält

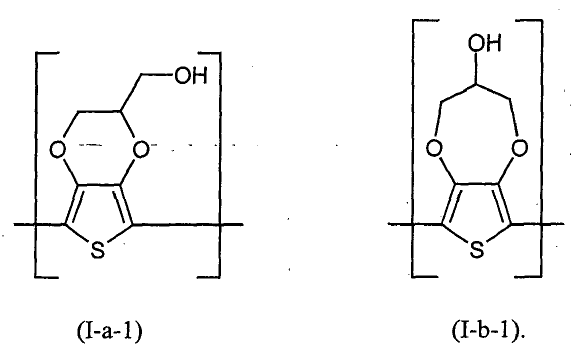

Besonders bevorzugt ist dies weiterhin ein Elektrolytkondensator, dadurch gekennzeichnet, dass es sich bei dem oxidierbaren Metall um ein Ventilmetall oder eine Verbindung mit vergleichbaren Eigenschaften handelt.

Als Ventilmetall sind im Rahmen der Erfindung solche Metalle zu verstehen, deren Oxidschichten den Stromfluss nicht in beide Richtungen gleichermaßen ermöglichen: Bei anodisch angelegter Spannung sperren die Oxidschichten der Ventilmetalle den Stromfluss, während es bei kathodisch angelegter Spannung zu großen Strömen kommt, die die Oxidschicht zerstören können. Zu den Ventilmetallen zählen Be, Mg, A1, Ge, Si, Sn, Sb, Bi, Ti, Zr, Hf, V, Nb, Ta und W sowie eine Legierung oder Verbindung von wenigstens einem dieser Metalle mit anderen Elementen. Die bekanntesten Vertretern der Ventilmetalle sind A1, Ta, und Nb. Verbindungen mit vergleichbaren Eigenschaften sind solche mit metallischer Leitfähigkeit, welche oxidierbar sind und deren Oxidschichten die vorangehend beschriebenen Eigenschaften besitzen. Beispielsweise besitzt NbO metallische Leitfähigkeit, wird jedoch im allgemeinen nicht als Ventilmetall betrachtet. Schichten von oxidiertem NbO weisen jedoch die typischen Eigenschaften von Ventilmetalloxidschichten auf, so dass NbO oder eine Legierung oder Verbindung von NbO mit anderen Elementen typische Beispiele für solche Verbindungen mit vergleichbaren Eigenschaften sind.

Demzufolge sind unter dem Begriff "oxidierbares Metall" nicht nur Metalle sondern auch eine Legierung oder Verbindung eines Metalls mit anderen Elementen gemeint, sofern sie metallische Leitfähigkeit besitzen und oxidierbar sind.

Besonders bevorzugt Gegenstand der vorliegenden Erfindung ist demgemäss ein Elektrolytkondensator, dadurch gekennzeichnet, dass es sich bei dem Ventilmetall oder der Verbindung mit vergleichbaren Eigenschaften um Tantal, Niob, Aluminium, Titan, Zirkon, Hafnium, Vanadium, eine Legierung oder Verbindung von wenigstens einem dieser Metalle mit anderen Elementen, NbO oder eine Legierung oder Verbindung von NbO mit anderen Elementen handelt.

Das "oxidierbare Metall" bildet im erfindungsgemäßen Elektrolytkondensator bevorzugt einen Anodenkörper mit großer Oberfläche, z.B. in Form eines porösen Sinterkörpers oder einer aufgerauhten Folie. Im Folgenden wird dieser auch kurz als Anodenkörper bezeichnet.

C₁-C₅-Alkylenreste A sind im Rahmen der Erfindung Methylen, Ethylen, n-Propylen, n-Butylen oder n-Pentylen. C₁-C₁₈-Alkyl steht im Rahmen der Erfindung für lineare oder verzweigte C₁-C₁₈-Alkylreste wie beispielsweise Methyl, Ethyl, n-oder iso-Propyl, n-, iso-, sec- oder tert-Butyl, n-Pentyl, 1-Methylbutyl, 2-Methylbutyl, 3-Methylbutyl, 1-Ethylpropyl 1,1-Dimethylpropyl, 1,2-Dimethylpropyl, 2,2-Dimethylpropyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl, C₅-C₁₂-Cycloalkyl für C₅-C₁₂-Cycloalkylreste wie beispielsweise Cyclopentyl, Cyclohexyl, Cycloheptyl, Cyclooctyl, Cyclononyl oder Cyclodecyl, C₅-C₁₄-Aryl für C₅-C₁₄-Arylreste wie beispielsweise Phenyl oder Naphthyl, und C₇-C₁₈-Aralkyl für C7-C₁₈-Aralkylreste wie beispielsweise Benzyl, o-, m-, p-Tolyl, 2,3-, 2,4-, 2,5-, 2,6-, 3,4-, 3,5-Xylyl oder Mesityl. Die vorangehende Aufzählung dient der beispielhaften Erläuterung der Erfindung und ist nicht als abschließend zu betrachten.

Als gegebenenfalls weitere Substituenten der C₁-C₅-Alkylenreste A kommen zahlreiche organische Gruppen in Frage, beispielsweise Alkyl-, Cycloalkyl-, Aryl-, Halogen-, Ether-, Thioether-, Disulfid-, Sulfoxid-, Sulfon-, Amino-, Aldehyd-, Keto-, Carbonsäureester-, Carbonat-, Cyano-, Alkylsilan- und Alkoxysilangruppen sowie Carboxylamidgruppen.

Die als Feststoffelektrolyt in den erfindungsgemäßen Elektrolytkondensatoren enthaltenen Polythiophene, sind bevorzugt kationische Polythiophene, wobei sich "kationisch" nur auf die Ladungen bezieht, die auf der Polythiophenhauptkette sitzen. Im Falle der Wiederholungseinheiten der Formel (I), (I-a) und (I-b) können die Polythiophene positive und negative Ladungen in der Struktureinheit tragen, wobei sich die positiven Ladungen auf der Polythiophenhauptkette und die negativen Ladungen an den durch Sulfonat- oder Carboxylatgruppen substituierten Resten R befinden. Dabei können die positiven Ladungen der Polythiophenhauptkette zum Teil oder vollständig durch die anionischen Gruppen an den Resten R abgesättigt werden. Insgesamt betrachtet können die Polythiophene in diesen Fällen kationisch, neutral oder sogar anionisch sein. Dennoch werden sie im Rahmen der Erfindung alle als kationische Polythiophene betrachtet, da die positiven Ladungen auf der Polythiophenhauptkette maßgeblich sind. Die positiven Ladungen sind in den Formeln nicht dargestellt, da ihre genaue Zahl und Position nicht einwandfrei feststellbar sind. Die Anzahl der positiven Ladungen beträgt jedoch mindestens 1 und höchstens n, wobei n die Gesamtanzahl aller wiederkehrenden Einheiten (gleicher oder unterschiedlicher) innerhalb des Polythiophens ist.

Zur Kompensation der positiven Ladung, soweit dies nicht bereits durch die gegebenenfalls Sulfonat- oder Carboxylat-substituierten und somit negativ geladenen Reste R erfolgt, benötigen die kationischen Polythiophene Anionen als Gegenionen.

Dies können monomere oder polymere Anionen, letztere im Folgenden als Polyanionen bezeichnet, sein.

Als Polyanionen dienen vorzugsweise die Anionen von polymeren Carbonsäuren, wie Polyacrylsäuren, Polymethacrylsäure oder Polymaleinsäuren, oder die Anionen von polymeren Sulfonsäuren, wie Polystyrolsulfonsäuren und Polyvinylsulfonsäuren. Diese Polycarbon- und -sulfonsäuren können auch Copolymere von Vinylcarbonund Vinylsulfonsäuren mit anderen polymerisierbaren Monomeren, wie Acrylsäureestern und Styrol, sein.

Besonders bevorzugt ist das Anion der Polystyrolsulfonsäure als Gegenion.

Das Molekulargewicht der die Polyanionen liefernden Polysäuren beträgt vorzugsweise 1 000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Als monomere Anionen dienen beispielsweise solche von Alkan- oder Cycloalkansulfonsäuren, aromatischen Sulfonsäuren oder Tetrafluoroborate, Hexafluorophosphate, Perchlorate, Hexafluoroantimonate, Hexafluoroarsenate oder Hexachloroantimonate.

Bevorzugt sind die Anionen der p-Toluolsulfonsäure, Methansulfonsäure oder Camphersulfonsäure.

Die als Feststoffelektrolyt in den erfindungsgemäßen Elektrolytkondensatoren enthaltenen Polythiophene enthalten insgesamt n wiederkehrende Einheiten der allgemeinen Formel (I), wobei n eine ganze Zahl von 2 bis 2000, bevorzugt 2 bis 100, ist. Die wiederkehrenden Einheiten der allgemeinen Formel (I) können innerhalb eines Polythiophens gleich oder verschieden sein. Bevorzugt sind es wiederkehrende Einheiten der allgemeinen Formel (I-a) und/oder (I-b). Für den Fall, dass wiederkehrende Einheiten der allgemeinen Formel (I-a) und (I-b) im Polythiophen enthalten sind, können die Reste R jeweils gleich oder verschieden, bevorzugt aber gleich sein. Die Einheiten der allgemeinen Formel (I-a) sind mit einem Anteil von 65 bis 99,5 %, bevorzugt mit einem Anteil von 75 bis 99 %, besonders bevorzugt mit einem Anteil von 75 bis 85 %, bezogen auf die Gesamtzahl der wiederkehrenden Einheiten im Polythiophen enthalten, und die Einheiten der allgemeinen Formel (I-b) sind mit einem Anteil von 0,5 bis 35 %, bevorzugt mit einem Anteil von 1 bis 25 %, besonders bevorzugt mit einem Anteil von 15 bis 25 %, bezogen auf die Gesamtzahl der wiederkehrenden Einheiten im Polythiophen enthalten, mit der Maßgabe, dass die Summe beider Anteile 100 % ergibt. Für den besonders bevorzugten Fall, dass die Reste R gleich H sind, sind die Einheiten der Formel (I-a-1) und (I-b-1) mit den gleichen vorangehend für (I-a) und (I-b) beschriebenen Anteilen im Polythiophen enthalten.

An den Endgruppen tragen die als Feststoffelektrolyt in den erfindungsgemäßen Elektrolytkondensatoren enthaltenen Polythiophene an den Verknüpfungsstellen bevorzugt jeweils H.

Prinzipiell wird ein solcher erfindungsgemäßer Elektrolytkondensator hergestellt, indem der Anodenkörper zunächst oxidativ, beispielsweise durch elektrochemische Oxidation, mit einem Dielektrikum, d. h. einer Oxidschicht, überzogen wird. Auf dem Dielektrikum wird dann mittels oxidativer Polymerisation chemisch oder elektrochemisch das leitfähige Polymer, erfindungsgemäß ein Polythiophen der allgemeinen Formel (I), abgeschieden, welches den Feststoffelektrolyten bildet. Ein Überzug mit weiteren gut leitfähigen Schichten, wie Graphit und Silber, dient der Ableitung des Stroms. Schließlich wird der Kondensatorkörper kontaktiert und eingekapselt.

Die erfindungsgemäß zu verwendenden Polythiophene werden auf den mit einer Oxidschicht bedeckten Anodenkörper durch oxidative Polymerisation von 3,4-Alkylendioxy-thiophenen der Formel (II), im Folgenden auch als Verbindungen der allgemeinen Formel (II) oder Thiophene bezeichnet, 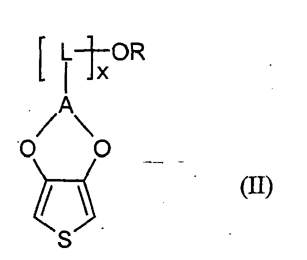 worin
A, L, x und R die oben für die allgemeine Formel (I) genannte Bedeutung haben,
erzeugt, indem man auf die Oxidschicht des Anodenkörpers die Thiophene der Formel (II), Oxidationsmittel und gegebenenfalls Gegenionen, vorzugsweise in Form von Lösungen, entweder getrennt nacheinander oder zusammen aufbringt und die oxidative Polymerisation, je nach Aktivität des verwendeten Oxidationsmittels, gegebenenfalls durch ein Erwärmen der Beschichtung zu Ende führt.

Weiterhin Gegenstand der vorliegenden Erfindung ist somit ein Verfahren zur Herstellung eines erfindungsgemäßen Elektrolytkondensators, dadurch gekennzeichnet, dass Verbindungen der allgemeinen Formel (II) oder ein Gemisch aus Verbindungen der allgemeinen Formel (II), 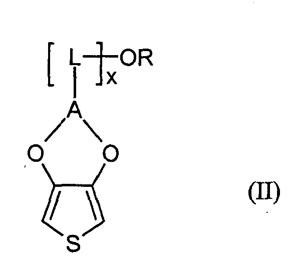 worin
A, L, x und R die oben für die allgemeine Formel (I) genannte Bedeutung haben,
ein Oxidationsmittel und gegebenenfalls Gegenionen, zusammen oder nacheinander vorzugsweise in Form von Lösungen, auf eine Oxidschicht eines Metalls aufgebracht und chemisch zu den Polythiophenen mit wiederkehrenden Einheiten der allgemeinen Formel (I), 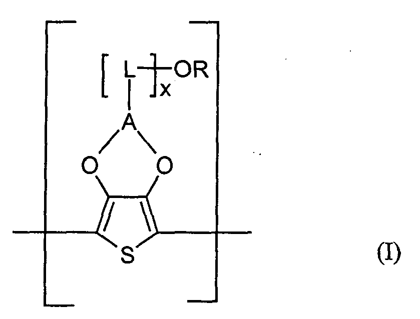 worin
A, L, x und R die oben genannte Bedeutung haben,
bei Temperaturen von-10°C bis 250°C, bevorzugt bei Temperaturen von 0°C bis 200°C, polymerisiert werden und dass die elektrisch leitfähige Schicht nach der Polymerisation und gegebenenfalls nach Tocknung mit geeigneten Lösungsmitteln gewaschen wird um überschüssiges Oxidationmittel und Restsalze zu entfernen.

Die Aufbringung kann direkt oder unter Verwendung eines Haftvermittlers, beispielsweise eines Silans, und/oder einer anderen funktionellen Schicht auf die Oxidschicht des Anodenkörpers erfolgen.

Die erfindungsgemäß zu verwendenden Polythiophene können nicht nur oxidativ chemisch sondern auch oxidativ elektrochemisch auf die Oxidschicht des Anodenkörpers aufgebracht werden.

Ebenfalls Gegenstand der vorliegenden Erfindung ist daher ein Verfahren zur Herstellung eines erfindungsgemäßen Elektrolytkondensators, dadurch gekennzeichnet, dass Verbindungen der allgemeinen Formel (II) oder ein Gemisch aus Verbindungen der allgemeinen Formel (II), 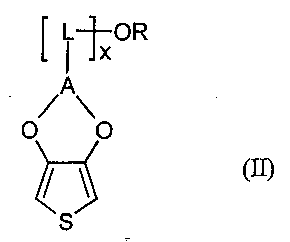 worin
A, L, x und R die oben für die allgemeine Formel (I) genannte Bedeutung haben,
und Gegenionen bevorzugt aus Lösung durch elektrochemische Polymerisation zu den Polythiophenen mit wiederkehrenden Einheiten der allgemeinen Formel (I), 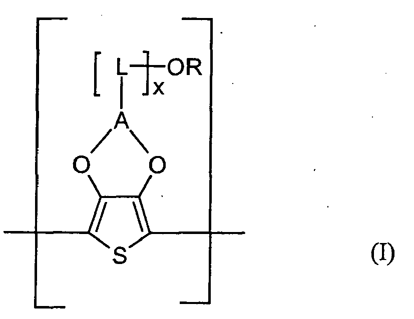 worin
A, L, x und R die oben genannte Bedeutung haben,
bei Temperaturen von -78°C bis 250°C auf eine Oxidschicht eines Metalls aufgebracht werden.

Die Aufbringung kann direkt oder unter Verwendung eines Haftvermittlers, beispielsweise eines Silans, und/oder einer anderen fünktionellen Schicht auf die Oxidschicht des Anodenkörpers erfolgen.

Die für die Herstellung der erfindungsgemäß zu verwendenden Polythiophene erforderlichen 3,4-Alkylendioxy-thiophene der Formel (II) sind bekannt oder nach bekannten Verfahren herstellbar (z. B. für x = 0 bzw. 1: US-A 5.111.327 oder US-A 5.187.608). Für 3,4-Alkylendioxy-thiophene der Formel (II) mit R = H und x = 1 bis 6 ist das Verfahren der sauer katalysierten Umetherung von 3,4-Dialkoxythiophenen mit 1 ,2,ω-Alkantriolen, wobei ω = x + 2 ist geeignet. Beispielhaft kann die Herstellung durch Umetherung so erfolgen, dass das 3,4-Dialkoxythiophen und ein 1,2,ω-Alkantriol, bevorzugt das Alkantriol im Überschuss, mit p-Toluolsulfonsäure als Katalysator unter N₂ für 2 h (oder länger) erhitzt werden, wobei der entstehende Alkohol langsam abdestilliert wird. Nach Abkühlen wird die verbleibende Flüssigkeit beispielsweise mit Methylenchlorid verdünnt, mit Wasser neutral gewaschen und die organische Phase über Na₂SO₄ getrocknet. Nach Entfernen des Lösungsmittels erhält man das 3,4-Alkylendioxy-thiophen der Formel (II). Dieses Verfahren ist auch in der deutschen Patentanmeldung DE 10 215 706 beschrieben. Diese Verbindungen können mittels dem Fachmann bekannter Verfahren, z. B. der Williamson-Ethersynthese, zu Produkten mit den anderen für Formel (II) angegebenen Resten R umgesetzt werden.

In bevorzugten Ausführungsformen des erfindungsgemäßen Verfahrens werden Verbindungen der allgemeinen Formeln (II-a) und/oder (II-b) oder ein Gemisch aus diesen, 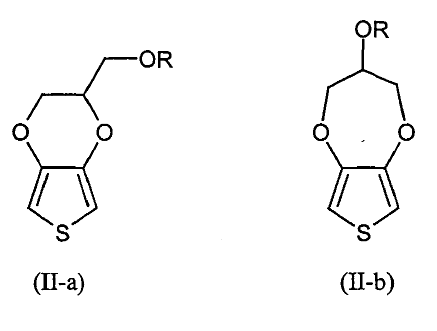 worin R die für die allgemeine Formel (I) genannte Bedeutung hat, insbesondere bevorzugt jedoch für H steht, eingesetzt.

In besonders bevorzugten Ausführungsformen des erfindungsgemäßen Verfahrens wird ein Gemisch aus Verbindungen der allgemeinen Formeln (II-a) und (II-b), worin R die für die allgemeine Formel (I) genannte Bedeutung hat, insbesondere bevorzugt jedoch für H steht, eingesetzt.

In diesen Gemischen sind die Verbindungen der allgemeinen Formel (II-a) mit einem Anteil von 65 bis 99,5 %, bevorzugt mit einem Anteil von 75 bis 99 %, besonders bevorzugt mit einem Anteil von 75 bis 85 %, bezogen auf die Gesamtstoffmenge der Thiophene, enthalten, und die Verbindungen der allgemeinen Formel (II-b) sind mit einem Anteil von 0,5 bis 35 %, bevorzugt mit einem Anteil von 1 bis 25 %, besonders bevorzugt mit einem Anteil von 15 bis 25 %, bezogen auf die Gesamtstoffmenge der Thiophene enthalten, mit der Maßgabe, dass die Summe beider Anteile 100 % ergibt.

Die oxidative chemische Polymerisation der 3,4-Alkylendioxy-thiophene der Formel (II) wird je nach verwendetem Oxidationsmittel und gewünschter Reaktionszeit im allgemeinen bei Temperaturen von -10°C bis 250°C, bevorzugt bei Temperaturen von 0°C bis 200°C, besonders bevorzugt bei Temperaturen von 20°C bis 200°C, vorgenommen.

Als Lösungsmittel für die Ethylendioxythiophene der Formel (II) und/oder Oxidationsmittel und/oder Gegenionen seien vor allem folgende unter den Reaktionsbedingungen inerten organischen Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamid wie Methylacetamid und Dimethylformamid; aliphatische und araliphatische Ether wie Diethylether und Anisol. Weiterhin kann auch Wasser oder Gemische aus Wasser mit den vorgenannten organischen Lösungsmitteln als Lösungsmittel verwendet werden.

Als Oxidationsmittel werden die dem Fachmann bekannten für die oxidative Polymerisation von Thiophenen geeigneten Oxidationsmittel verwendet; diese sind beispielsweise in J. Am. Chem. Soc., 85, 454 (1963) beschrieben. Bevorzugt sind aus praktischen Gründen preiswerte und leicht handhabbare Oxidationsmittel wie Eisen-III-Salze anorganischer Säuren, wie beispielsweise FeCl₃, Fe(ClO₄)₃, und die Eisen-III-Salze organischer Säuren und organische Reste aufweisender anorganischer Säuren, ferner H₂O₂, K₂Cr₂O7, Alkali- und Ammoniumperoxodisulfate, Alkaliperborate, Kaliumpermanganat, Kupfersalze, wie Kupfertetrafluoroborat oder Cer(IV)-Salze bzw. CeO₂.

Für die oxidative Polymerisation der Thiophene der Formel II werden theoretisch je Mol Thiophen 2,25 Äquivalente Oxidationsmittel benötigt (siehe z.B. J. Polym. Sc. Part A Polymer Chemistry Vol. 26, S. 1287 (1988)). Es können aber auch niedrigere oder höhere Äquivalente an Oxidationsmittel eingesetzt werden.

Die Verwendung der Peroxodisulfate und der Eisen-III-salze organischer Säuren und der organischen Reste aufweisenden anorganischen Säuren hat die großen anwendungstechnischen Vorteile, dass sie nicht korrosiv wirken und vor allem, dass mit ihnen die Oxidation der 3,4-Alkylendioxy-thiophene der Formel (II) so langsam verläuft, dass man Thiophene, Oxidationsmittel und gegebenenfalls Gegenionen zusammen aus einer Lösung bzw. einer Druckpaste auf die Oxidschicht des Anodenkörpers aufbringen kann. Nach dem Aufbringen der Lösung bzw. der Paste lässt sich die Oxidation durch Erwärmen des Anodenkörpers beschleunigen.

Mit den anderen vorstehend genannten Oxidationsmitteln wie FeCl₃, H₂O₂ oder Perboraten, verläuft die oxidative Polymerisation so schnell, so dass ein getrenntes Aufbringen von Oxidationsmittel und Thiophen auf das auszurüstende Substrat erforderlich, ein Erwärmen dagegen nicht mehr nötig ist.

Als Eisen-III-Salze organische Reste aufweisender anorganischer Säuren seien beispielsweise die Eisen-III-Salze der Schwefelsäurehalbester von C₁-C₂₀-Alkanolen, z.B. das Fe-III-Salz des Laurylsulfates genannt.

Als Eisen-III-Salze organischer Säuren seien beispielsweise genannt: die Fe-III-Salze von C₁-C₂₀-Alkansulfonsäuren, wie der Methan- und der Dodecansulfonsäure, aliphatischen C₁-C₂₀-Carbonsäuren wie der 2-Ethylhexylcarbonsäure, aliphatischen Perfluorcarbonsäuren, wie der Trifluoressigsäure und der Perfluoroctansäure, aliphatischen Dicarbonsäuren, wie der Oxalsäure und vor allem von aromatischen, gegebenenfalls durch C₁-C₂₀-Alkylgruppen substituierten Sulfonsäuren wie der Benzolsulfonsäure, p-Toluolsulfonsäure und der Dodecylbenzolsulfonsäure und Cycloalkansulfonsäuren wie Camphersulfonsäure.

Es können auch Gemische dieser vorgenannten Fe-III-Salze organischer Säuren eingesetzt werden.

Bei getrennter Aufbringung von 3,4-Alkylendioxy-thiophenen der Formel (II), Oxidationsmitteln und gegebenenfalls Gegenionen wird die Oxidschicht des Anodenkörpers vorzugsweise zunächst mit der Lösung des Oxidationsmittels und gegebenenfalls der Gegenionen und anschließend mit der Lösung des 3,4-Alkylendioxy-thiophens beschichtet. Bei der bevorzugten gemeinsamen Aufbringung von Thiophen, Oxidationsmittel und gegebenenfalls Gegenionen wird die Oxidschicht des Anodenkörpers nur mit einer, nämlich einer Thiophen, Oxidationsmittel und gegebenenfalls Gegenionen enthaltenden Lösung beschichtet.

Den erfindungsgemäßen Mischungen können außerdem weitere Komponenten wie ein oder mehrere in organischen Lösungsmitteln lösliche organische Binder wie Polyvinylacetat, Polycarbonat, Polyvinylbutyral, Polyacrylsäureester, Polymethacrylsäureester, Polystyrol, Polyacrylonitril, Polyvinylchlorid, Polybutadien, Polyisopren, Polyether, Polyester, Silicone, Styrol/Acrylsäureester-, Vinylacetat/Acrylsäureesterund Ethylen/Vinylacetat-Copolymerisate oder wasserlösliche Binder wie Polyvinylalkohole, Vernetzer wie Polyurethane bzw. Polyurethandispersionen, Polyacrylate, Polyolefindispersionen, Epoxisilane, wie 3-Glycidoxypropyltrialkoxysilan, und Additive wie z.B. oberflächenaktive Stoffe zugesetzt werden. Weiterhin können Silanhydrolysate z.B. auf Basis von Tetraethoxysilan zur Erhöhung der Kratzfestigkeit bei Beschichtungen zugesetzt werden.

Die auf die Oxidschicht des Anodenkörpers aufzubringenden Lösungen enthalten vorzugsweise 1 bis 30 Gew.-% des Thiophens der Formel (II) und 0 bis 50 Gew.-%, bevorzugt 0 bis 30 Gew.-% Bindemittel, Vernetzer und/oder Additive, beide Gewichtsprozente bezogen auf das Gesamtgewicht der Lösung.

Die Lösungen werden nach bekannten Verfahren, z.B. durch Tränkung, Gießen, Auftropfen, Spritzen, Aufsprühen, Aufrakeln, Bestreichen oder Bedrucken auf die Oxidschicht des Anodenkörpers aufgebracht.

Das Entfernen der Lösungsmittel nach dem Aufbringen der Lösungen kann durch einfaches Abdampfen bei Raumtemperatur erfolgen. Zur Erzielung höherer Verarbeitungsgeschwindigkeiten ist es jedoch vorteilhafter, die Lösungsmittel bei erhöhten Temperaturen, z.B. bei Temperaturen von 20 bis zu 300°C, bevorzugt 40 bis zu 250°C, zu entfernen. Eine thermische Nachbehandlung kann unmittelbar mit dem Entfernen des Lösungsmittel verbunden oder aber auch in zeitlichem Abstand von der Fertigstellung der Beschichtung vorgenommen werden.

Die Dauer der Wärmebehandlung beträgt in Abhängigkeit von der Art des für die Beschichtung verwendeten Polymers 5 Sekunden bis mehrere Stunden. Für die thermische Behandlung können auch Temperaturprofile mit unterschiedlichen Temperaturen und Verweilzeiten eingesetzt werden.

Die Wärmebehandlung kann z.B. in der Weise ausgeführt werden, dass man die beschichteten Anodenkörper mit einer solchen Geschwindigkeit durch eine auf der gewünschten Temperatur befindliche Wärmekammer bewegt, so dass die gewünschte Verweilzeit bei der gewählten Temperatur erreicht wird, oder mit einer auf der gewünschten Temperatur befindlichen Heizplatte für die gewünschte Verweilzeit in Kontakt bringt. Des Weiteren kann die Wärmebehandlung beispielsweise in einem Wärmeofen oder mehreren Wärmeöfen mit jeweils unterschiedlichen Temperaturen erfolgen.

Nach dem Entfernen der Lösungsmittel (Trocknen) und gegebenenfalls nach der thermischen Nachbehandlung kann es vorteilhaft sein, das überschüssige Oxidationsmittel und Restsalze aus der Beschichtung mit einem geeigneten Lösungsmittel, bevorzugt Wasser oder Alkoholen, auszuwaschen. Unter Restsalzen sind hier die Salze der reduzierten Form des Oxidationsmittels und gegebenenfalls weitere vorhandene Salze zu verstehen.

Die elektrochemische oxidative Polymerisation der substituierten 3,4-Alkylendioxythiophene der allgemeinen Formel (II) kann bei Temperaturen von -78°C bis zum Siedepunkt des eingesetzten Lösungsmittels vorgenommen werden. Bevorzugt wird bei Temperaturen von -20°C bis 60°C elektropolymerisiert.

Die Reaktionszeiten betragen in Abhängigkeit vom verwendeten Monomer, dem verwendeten Elektrolyten, der gewählten Elektropolymerisationstemperatur und der angewendeten Stromdichte 1 Minute bis 24 Stunden.

Sofern die Thiophene der allgemeinen Formel (II) flüssig sind, kann die Elektropolymerisation in An- oder Abwesenheit von unter den Elektropolymerisationsbedingungen inerten Lösungsmitteln vorgenommen werden; die Elektropolymerisation von festen Thiophenen der Formel (II) wird in Gegenwart von unter den Elektropolymerisationsbedingungen inerten Lösungsmitteln durchgeführt. In bestimmten Fällen kann es vorteilhaft sein, Lösungsmittelgemische einzusetzen und/oder den Lösungsmitteln Lösungsvermittler (Detergentien) zuzusetzen.

Als unter den Elektropolymerisationsbedingungen inerte Lösungsmittel seien beispielsweise genannt: Wasser; Alkohole wie Methanol und Ethanol; Ketone wie Acetophenon; halogenierte Kohlenwasserstoffe wie Methylenchlorid, Chloroform, Tetrachlorkohlenstoff und Fluorkohlenwasserstoffe; Ester wie Ethylacetat und Butylacetat; Kohlensäureester wie Propylencarbonat; aromatische Kohlenwasserstoffe wie Benzol, Toluol, Xylol; aliphatische Kohlenwasserstoffe wie Pentan, Hexan, Heptan und Cyclohexan; Nitrile wie Acetonitril und Benzonitril; Sulfoxide wie Dimethylsulfoxid; Sulfone wie Dimethylsulfon, Phenylmethylsulfon und Sulfolan; flüssige aliphatische Amide wie Methylacetamid, Dimethylacetamid, Dimethylformamid, Pyrrolidon, N-Methylpyrrolidon, N-Methylcaprolactam; aliphatische und gemischt aliphatisch-aromatische Ether wie Diethylether und Anisol; flüssige Harnstoffe wie Tetramethylharnstoff oder N-N-Dimethyl-imidazolidinon.

Für die Elektropolymerisation werden die substituierten 3,4-Alkylendioxythiophene der allgemeinen Formel (II) bzw. deren Lösungen mit Elektrolytzusätzen versetzt. Als Elektrolytzusätze werden vorzugsweise freie Säuren oder übliche Leitsalze verwendet, die eine gewisse Löslichkeit in den verwendeten Lösungsmitteln aufweisen. Als Elektrolytzusätze haben sich z.B. bewährt: freie Säuren wie p-Toluolsulfonsäure, Methansulfonsäure, ferner Salze mit Alkansulfonat-, aromatischen Sulfonat-, Tetrafluoroborat-, Hexafluorophosphat-, Perchlorat-, Hexafluoroantimonat-, Hexafluoroarsenat- und Hexachloroantimonat-Anionen und Alkali-, Erdalkali- oder gegebenenfalls alkylierten Ammonium-, Phosphonium-, Sulfonium- und Oxonium-Kationen.

Die Konzentrationen der monomeren Thiophene der allgemeinen Formel (II) können zwischen 0,01 und 100 Gew.-% (100 Gew.-% nur bei flüssigem Thiophen) liegen; bevorzugt betragen die Konzentrationen 0,1 bis 20 Gew.-%, besonders bevorzugt 0,1 bis 5 Gew.-%.

Die Elektropolymerisation kann diskontinuierlich oder kontinuierlich durchgeführt werden.

Die Stromdichten für die Elektropolymerisation können in weiten Grenzen schwanken; üblicherweise wird mit Stromdichten von 0,0001 bis 100 mA/cm², vorzugsweise 0,01 bis 40 mA/cm² gearbeitet. Bei diesen Stromdichten stellen sich Spannungen von etwa 0,1 bis 50 V ein.

Als Gegenionen eignen sich die oben bereits aufgeführten monomeren oder polymeren Anionen, bevorzugt diejenigen der monomeren oder polymeren Alkan- oder Cycloalkansulfonsäuren oder aromatischen Sulfonsäuren. Besonders bevorzugt zur Anwendung in den erfindungsgemäßen Elektrolytkondensatoren sind die Anionen der monomeren Alkan- oder Cycloalkansulfonsäuren oder aromatischen Sulfonsäuren, da diese enthaltende Lösungen besser geeignet sind in das poröse Anodenmaterial einzudringen und somit eine größere Kontaktfläche zwischen diesem und dem Feststoffelektrolyten gebildet werden kann. Die Gegenionen werden den Lösungen beispielsweise in Form ihrer Alkalisalze oder als freie Säuren zugegeben. Bei der elektrochemischen Polymerisation werden diese Gegenionen der Elektropolymerisationslösung oder den Thiophenen gegebenenfalls als Elektrolytzusätze oder Leitsalze zugegeben.

Außerdem können als Gegenionen die gegebenenfalls vorhandenen Anionen des verwendeten Oxidationsmittels dienen, so dass im Falle der chemischen oxidativen Polymerisation eine Zugabe zusätzlicher Gegenionen nicht zwingend erforderlich ist.

Weiterhin Gegenstand der vorliegenden Erfindung ist die Verwendung von Polythiophenen mit wiederkehrenden Einheiten der allgemeinen Formel (I), 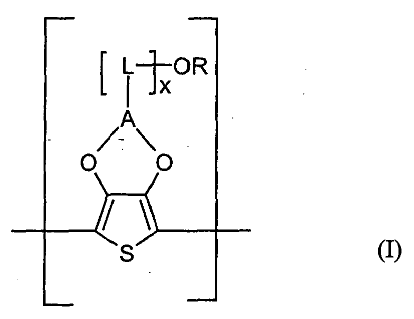 worin
A, L, x und R die oben genannte Bedeutung haben,
als Feststoffelektrolyte in Elektrolytkondensatoren, bevorzugt in solchen, die als oxidierbares Metall ein Ventilmetall oder eine Verbindung mit vergleichbaren Eigenschaften enthalten, welche besonders bevorzugt Tantal, Niob, Aluminium, Titan, Zirkon, Hafnium, Vanadium, eine Legierung oder Verbindung von wenigstens einem dieser Metalle mit anderen Elementen, NbO oder eine Legierung oder Verbindung von NbO mit anderen Elementen sind.

Die erfindungsgemäße Verwendung der Polythiophene mit wiederkehrenden Einheiten der allgemeinen Formel (I) als Feststoffelektrolyte in Elektrolytkondensatoren bietet gegenüber bekannten Feststoffelektrolyten wie Poly(3,4-Ethylendioxythiophen) den Vorteil, dass überschüssiges Oxidationsmittel und Restsalze, welche unter Umständen trotz Waschvorgang in der Polythiophenschicht verbleiben, besser in der Schicht gebunden werden, so dass eine deutlich niedrigere Neigung zur Kristallisation resultiert. Unter Umständen kann dadurch der Waschvorgang sogar völlig ausgelassen werden ohne die Qualität der Polythiophenschicht wesentlich zu beeinträchtigen, was eine Vereinfachung des Herstellprozesses zur Folge hat. Da die in Kondensatoren mit bekannten Feststoffelektrolyten gebildeten Kristalle zu eingangs beschriebenen Nachteilen des erhöhten Serienwiderstand durch auftretende Kontaktwiderstände bzw. der Beschädigung des Dielektrikums (Oxidschicht) oder des Überzugs aus weiteren gut leitfähigen Schichten wie Graphit und Silber führen können, zeigen die erfindungsgemäßen Elektrolytkondensatoren, in denen die Kristallisation unterdrückt wird, niedrigere Serienwiderstände.

Vorteilhafterweise zeigen die Polythiophene mit wiederkehrenden Einheiten der allgemeinen Formel (I) des Weiteren höhere Leitfähigkeit als beispielsweise die bekannten Poly(3,4-ethylendioxythiophene) und die auf die Anodenkörper aufgebrachten Beschichtungen sind überraschend homogener als beispielsweise die des bekannten Poly(3,4-ethylendioxythiophen)s. Diese verbesserte Homogenität, welche in einer Verringerung von Unebenheiten und der Zahl vorhandener Löcher besteht, verringert beispielsweise das Durchdringen von Graphit oder Silber durch die Polythiophenbeschichtung und somit den Kontakt mit dem Dielektrikum. Ein solches Durchdringen kann bei Beschichtungen aus Poly(3,4-ethylendioxythiophen) mit geringerer Homogenität beispielsweise an besonders dünnen Stellen oder Löchern - hervorgerufen durch Unebenheiten - leichter auftreten. Entsprechend wird der Reststrom in den erfindungsgemäßen Elektrolytkondensatoren vermindert.

Allerdings eignen sich die Polythiophene mit wiederkehrenden Einheiten der allgemeinen Formel (I) nicht nur als Feststoffelektrolyte in Elektrolytkondensatoren, sondern ebenfalls zur Herstellung besonders leitfähiger Schichten für andere Anwendungen. Dabei wird überraschend eine erhöhte Leitfähigkeit gegenüber aus US-A 5,111,327 bekannten Schichten aus diesen Polythiophenen beobachtet.

Erfindungsgemäß werden die Schichten durch ein Verfahren hergestellt, welches durch oxidative Polymerisation der Thiophene der allgemeinen Formel (II) zu Polythiophenen mit wiederkehrenden Einheiten der allgemeinen Formel (I) direkt die leitfahigen Schichten liefert, ohne dass weitere Reduktions- und erneute Oxidationsschritte durchlaufen werden. Dies führt nicht nur zu einer erheblichen Vereinfachung des Verfahrens, sondern auch zu einer unerwarteten Steigerung der Leitfähigkeit auf 150 S/cm und mehr.

Die oxidative Polymerisation kann chemisch oder elektrochemisch erfolgen.

Weiterhin Gegenstand der vorliegenden Erfindung ist daher ein Verfahren zur Herstellung elektrisch leitfähiger Schichten mit einer spezifischen Leitfähigkeit von mindestens 150 S/cm, bevorzugt mindestens 180 S/cm, besonders bevorzugt mindestens 200 S/cm, dadurch gekennzeichnet, dass Verbindungen der allgemeinen Formel (II) oder ein Gemisch aus Verbindungen der allgemeinen Formel (II), 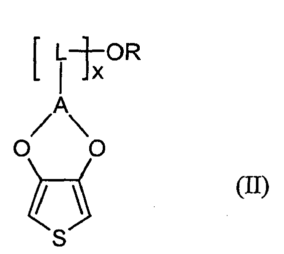 worin
A, L, x und R die für die allgemeine Formel (I) genannte Bedeutung haben,
ein Oxidationsmittel und gegebenenfalls Gegenionen, zusammen oder nacheinander vorzugsweise in Form von Lösungen, auf eine Unterlage aufgebracht und auf dieser Unterlage chemisch zu den Polythiophenen der allgemeinen Formel (I), 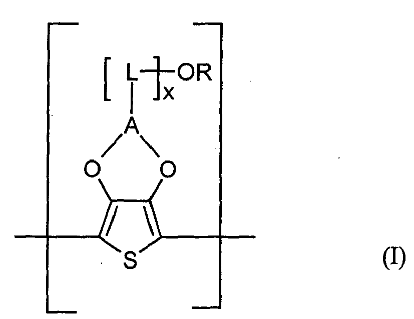 worin
A, L, x und R die oben genannte Bedeutung haben,
bei Temperaturen von-10°C bis 250°C, bevorzugt bei Temperaturen von 0°C bis 200°C, polymerisiert werden.

Ebenfalls Gegenstand der vorliegenden Erfindung ist ein Verfahren zur Herstellung elektrisch leitfähiger Schichten mit einer spezifischen Leitfähigkeit von mindestens 150 S/cm, bevorzugt mindestens 180 S/cm, besonders bevorzugt mindestens 200 S/cm, dadurch gekennzeichnet, dass Verbindungen der allgemeinen Formel (II) oder ein Gemisch aus Verbindungen der allgemeinen Formel (II), 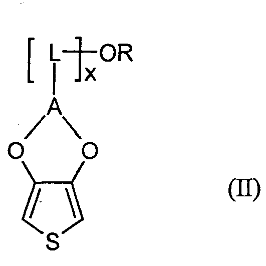 worin
A, L, x und R die für die allgemeine Formel (I) genannte Bedeutung haben,
und Gegenionen bevorzugt aus Lösung durch elektrochemische Polymerisation zu den Polythiophenen mit wiederkehrenden Einheiten der allgemeinen Formel (I), 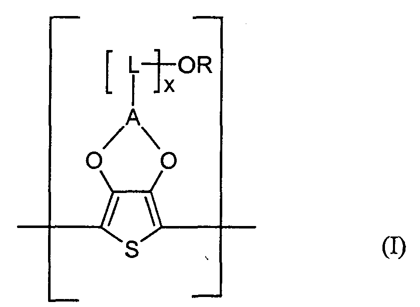 worin
A, L, x und R die oben genannte Bedeutung haben,
bei Temperaturen von -78°C bis 250°C auf eine Unterlage aufgebracht werden.

Bevorzugt sind dies Verfahren, dadurch gekennzeichnet, dass Verbindungen der allgemeinen Formeln (II-a) und/oder (II-b) oder ein Gemisch aus diesen, 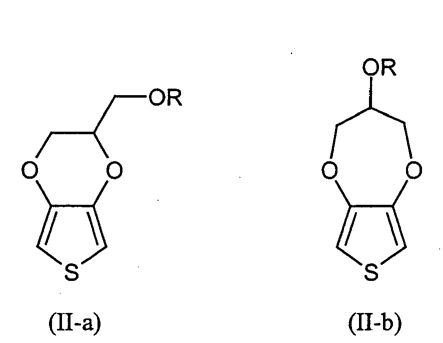 worin
- R: die für die allgemeine Formel (I) genannte Bedeutung hat, insbesondere bevorzugt jedoch für H steht, oxidativ chemisch oder elektrochemisch polymerisiert werden.

Besonders bevorzugt sind dies Verfahren worin als Gemisch aus Verbindungen der allgemeinen Formel (II) ein Gemisch der Thiophene (II-a) und (II-b), 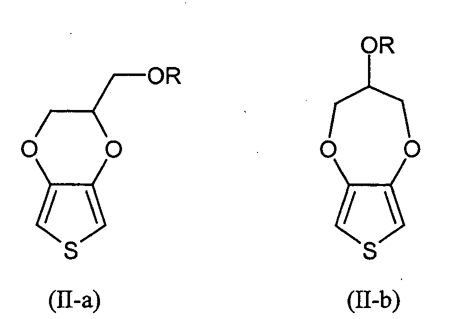 worin
- R: die oben genannte Bedeutung hat, insbesondere bevorzugt jedoch für H steht, oxidativ chemisch oder elektrochemisch polymerisiert wird.

Beispielhafte und bevorzugte Reaktionsbedingungen, Molverhältnisse, Gewichtsprozentangaben, Lösungsmittel, Oxidationsmittel, Leitsalze und Gegenionen sowie im Zusammenhang mit diesen beschriebene Varianten bzw. Besonderheiten bei der Durchführung der chemischen oder elektrochemischen oxidativen Polymerisation entsprechen dem vorangehend für die Herstellung der Elektrolytkondensatoren bereits beschriebenen.

Beispielsweise sind bevorzugt eingesetzte Oxidationsmittel Alkali- oder Ammoniumperoxodisulfate, Wasserstoffperoxid, Perborate, Eisen-III-salze organischer Säuren, Eisen-III-salze anorganischer Säuren oder Eisen-III-salze anorganischer Säuren, welche organische Reste aufweisen, wobei beispielhafte Vertreter dieser Salze vorangehend aufgeführt sind.

Thiophene, Oxidationsmittel und gegebenenfalls Gegenionen können ebenfalls - unter vorangehend genannten Bedingungen - zusammen oder nacheinander auf die Unterlage aufgebracht werden.

Des Weiteren können die verwendeten Lösungen zusätzlich einen oder mehrere Binder, Vernetzer und/oder Additive ausgewählt aus den beispielhaft vorangehend aufgeführten enthalten.

Bei den Gegenionen handelt es sich um Anionen von monomeren oder polymeren Alkan- oder Cycloalkansulfonsäuren oder aromatischen Sulfonsäuren ausgewählt aus vorangehend genannten beispielhaft aufgeführten, wobei für die Bildung von Polymerfilmen die Polyanionen zu verbesserten Filmbildungseigenschaften führen können.

Die erfindungsgemäß hergestellten elektrisch leitfähigen Schichten können nach der Polymerisation und gegebenenfalls nach Trocknung - ebenso wie bei den Elektrolytkondensatoren beschrieben - mit geeigneten Lösungsmitteln gewaschen werden, um überschüssiges Oxidationsmittel und Restsalze zu entfernen.

Bei der Unterlage kann es sich beispielsweise um Glas, Dünstglas (flexibles Glas) oder Kunststoffe handeln, die im Falle der elektrochemischen Polymerisation mit einer leitfähigen Schicht (Elektrode) versehen sind.

Besonders geeignete Kunststoffe sind: Polycarbonate, Polyester wie z.B. PET und PEN (Polyethylenterephthalat bzw. Polyethylennaphthalindicarboxylat), Copolycarbonate, Polysulfon, Polyethersulfon, Polyimid, Polyethylen, Polypropylen oder cyclische Polyolefine bzw. cyclische Olefincopolymere (COC), hydrierte Styrolpolymere oder hydrierte Styrolcopolymere.

Geeignete Polymerunterlagen können beispielsweise Folien wie Polyesterfolien, PES-Folien der Firma Sumitomo oder Polycarbonatfolien der Firma Bayer AG (Makrofol®) sein.

Die erfindungsgemäß hergestellten leitfahigen Schichten können auf der Unterlage verbleiben oder von dieser abgelöst werden.

Die Polythiophenschichten besitzen je nach Anwendung eine Dicke von 1 nm bis 100 µm, bevorzugt 10 nm bis 10 µm, besonders bevorzugt 50 nm bis 1 µm.

Weiterhin Gegenstand der vorliegenden Erfindung sind elektrisch leitfähige Schichten mit einer spezifischen Leitfähigkeit von mindestens 150 S/cm, bevorzugt mindestens 180 S/cm, besonders bevorzugt mindestens 200 S/cm, erhältlich nach einem der vorangehend beschriebenen erfindungsgemäßen Verfahren. Sie können Vorteilhafterweise transparent sein.

Die erfmdungsgemäßen Schichten eignen sich hervorragend für die Verwendung als antistatische Beschichtung, als transparente Heizung, als gegebenenfalls transparente Elektroden, als lochinjizierende oder lochleitende Schichten in organischen Leuchtdioden, zur Durchkontaktierung von Leiterplatten oder als Feststoffelektrolyt in Elektrolytkondensatoren.

Als antistatische Beschichtungen können sie beispielsweise auf Filmen, Verpackungen elektronischer Bauteile, zur Ausrüstung von Kunststofffolien sowie zur Bildschirmbeschichtung eingesetzt werde. Weiterhin können sie als Kathodenmaterialien in Kondensatoren, als transparente Elektroden z.B. in Displays, beispielsweise als Ersatz für Indium-Zinn-Oxid-Elektroden, oder als elektrische Leiter in polymerer Elektronik verwendet werden. Weitere Einsatzmöglichkeiten bieten Sensoren, Batterien, Solarzellen, elektrochrome Fenster (smart windows) und Displays sowie der Korrosionsschutz.

Auch bei diesen Anwendungen bietet die bessere Bindung von Salzen, wie überschüssigem Oxidationsmittel und Restsalzen, sowie die verbesserte Homogenität der Schichten deutliche Vorteile gegenüber bekannten Schichten, beispielsweise aus Poly(3,4-ethylendioxythiophen), bei zusätzlich verbesserter Leitfähigkeit.

Ebenfalls ist überraschend eine verbesserte Leitfähigkeit der nach dem erfindungsgemäßen Verfahren hergestellten Schichten gegenüber bekannten Schichten enthaltend Polythiophene mit wiederkehrenden Einheiten der allgemeinen Formel (I) zu beobachten. Außerdem ist das erfindungsgemäße Verfahren deutlich einfacher in der Durchführung als das in US-A 5.111.327 beschriebene.

Die im Folgenden aufgeführten Beispiele sind nicht als Beschränkung aufzufassen.

### Beispiele

### Beispiel 1:

Es wurde eine Lösung, bestehend aus 0,6 g substituiertem 3,4-Alkylendioxythiophen (3.5 mmol) (zusammengesetzt aus 80 % der Verbindung (II-a-1) und 20 % der Verbindung (II-b-1)), 4,5 g Fe(III)tosylat (7,9 mmol) und 6,75 g Butanol (91 mmol) hergestellt und ein Teil der Lösung auf ein Glassubstrat mittels eines Spincoaters bei 2000 U/min für 5 Sekunden aufgeschleudert. Die Probe wurde 15 min bei 25°C getrocknet und anschließend 15 min in Methanol gewaschen. Nach dem Trocknen wurde über eine Vier-Punkt-Messung mit einem Keithley 199 Multimeter der Oberflächenwiderstand ermittelt. Die Schichtdicke wurde mit einem Tencor Alpha Step 500 Surface Profiler bestimmt. Aus Oberflächenwiderstand und Schichtdicke wurde die spezifische Leitfähigkeit ermittelt.

Als Vergleich wurde eine Lösung aus 0,5 g 3,4-Ethylendioxythiophen (3,5 mmol), 4,5 g Fe(III)tosylat (7,9 mmol) und 6,75 g Butanol (91 mmol) hergestellt und aus dieser entsprechend dem obigen Verfahren ebenfalls eine Probe hergestellt.

Es ergaben sich folgende Messwerte:

| | Substituiertes 3,4-Alkylendioxythiophen | 3,4-Ethylendioxythiophen |
|---|---|---|
| Oberflächenwiderstand | 118 Ω/square | 258 Ω/square |
| Schichtdicke | 375 nm | 306 nm |
| spezifische Leitfähigkeit | 226 S/cm | 127 S/cm |

Die erfindungsgemäße Probe aus substituiertem Poly(3,4-alkylendioxythiophen) hat eine deutlich höhere spezifische Leitfähigkeit als die Probe aus Poly(3,4-ethylendioxythiophen). Gleichzeitig ist die Schichtdicke größer, was in Verbindung mit der höheren Leitfähigkeit zu erheblich niedrigeren Oberflächenwiderständen führt.

### Beispiel 2:

Es wurden Proben analog zu Beispiel 1 hergestellt und lichtmikroskopische Aufnahmen der Filme bei 1000 facher Vergrößerung aufgenommen.

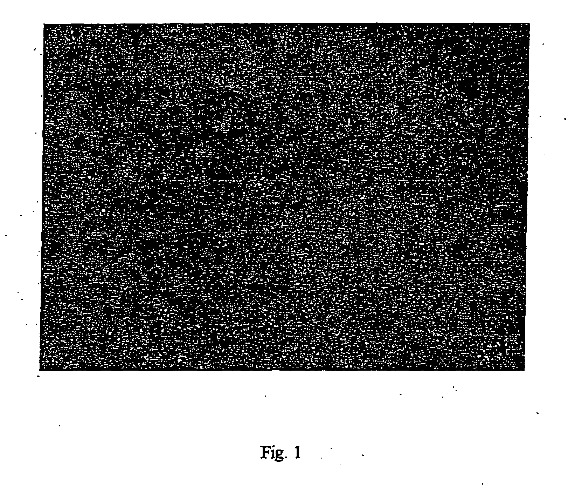

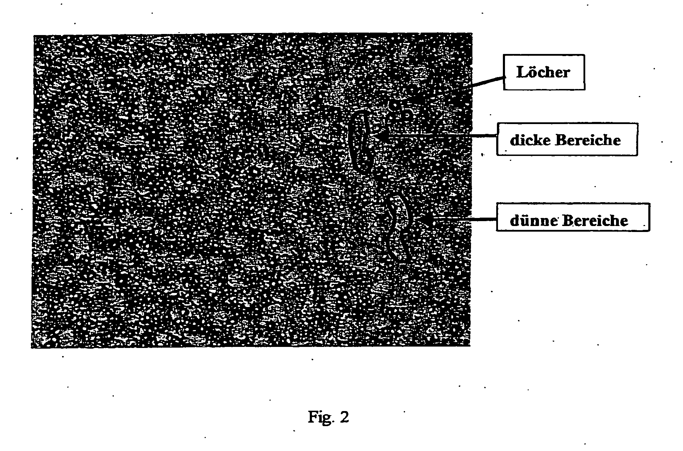

Fig. 1 zeigt die Aufnahme des erfindungsgemäßen leitfähigen Films aus Poly(3,4-alkylendioxythiophen) hergestellt aus den Monomeren (II-a-1) und (II-b-1), Fig. 2 die Aufnahme des leitfähigen Films aus Poly(3,4-ethylendioxythiophen). Helle Bereiche zeigen Löcher bzw. dünnere Stellen im Film an. Während der erfindungsgemäße Film aus substituiertem Poly(3,4-alkylendioxythiophen) hergestellt aus den Monomeren (II-a-1) und (II-b-1) sehr homogen ist, ist der Film aus Poly(3,4-ethylendioxythiophen) sehr inhomogen in seiner Dicke und weist sehr viele Löcher auf.

Fig. 1: Lichtmikroskopische Aufnahme eines erfindungsgemäßen leitfähigen Films aus substituiertem Poly(3,4-alkylendioxythiophen) hergestellt aus Verbindungen (II-a-1) und (H-b-1)(Beispiel 2)

Fig. 2: Lichtmikroskopische Aufnahme eines leitfähigen Films aus Poly(3,4-ethylendioxythiophen) (Beispiel 2)

### Beispiel 3:

Es wurde eine Lösung, bestehend aus 0,6 g substituiertem 3,4-Alkylendioxythiophen (3,5 mmol) (zusammengesetzt aus 80 % der Verbindung (II-a-1) und 20 % der Verbindung (II-b-1)), 4,5 g Fe(III)tosylat (7,9 mmol) und 6,75 g Butanol (91 mmol) hergestellt und ein Teil der Lösung auf ein Glassubstrat mittels eines Spincoaters bei 2000 U/min für 5 Sekunden aufgeschleudert. Die Probe wurde 15 min bei 25°C getrocknet.

Als Vergleich wurde eine Lösung aus 0,5 g 3,4-Ethylendioxythiophen (3,5 mmol), 4,5 g Fe(III)tosylat (7,9 mmol) und 6,75 g Butanol (91 mmol) hergestellt und aus dieser entsprechend dem obigen Verfahren ebenfalls eine Probe hergestellt.

Von den Proben wurden lichtmikroskopische Aufnahmen bei 1000facher Vergrößerung aufgenommen.

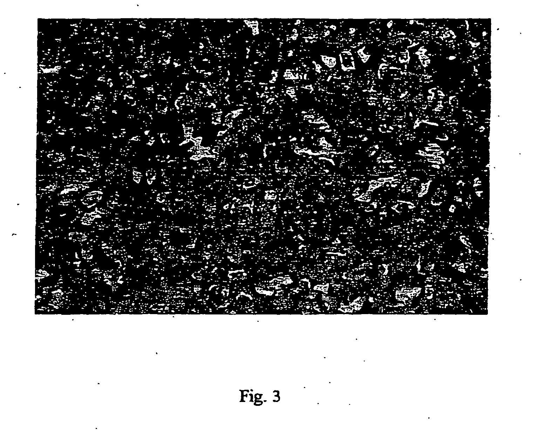

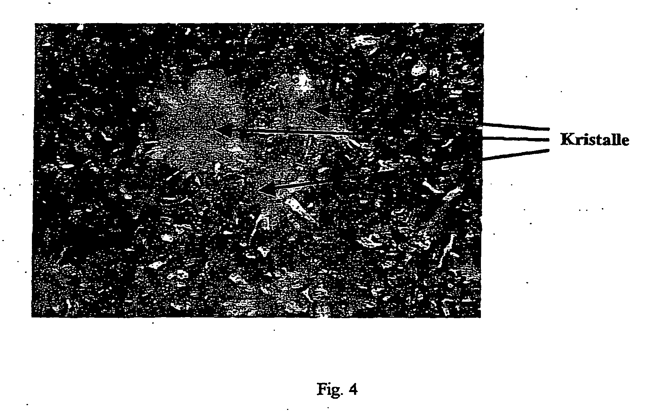

Fig. 3 zeigt die Aufnahme des nicht ausgewaschenen Films aus substituiertem Poly(3,4-alkylendioxythiophen) hergestellt aus den Monomeren (II-a-1) und (II-b-1) nach 17 Stunden Lagerung, Fig. 4 die Aufnahme des nicht ausgewaschenen Films aus Poly(3,4-ethylendioxythiophen) nach 17 Stunden Lagerung. Deutlich sind in dem Film aus Poly(3,4-ethylendioxythiophen) gelbe Eisensalzkristalle zu erkennen. Der erfindungsgemäße Film aus substituiertem Poly(3,4-Alkylendioxythiophen) hergestellt aus den Monomeren (II-a-1) und (II-b-1) bindet die Eisensalze, so dass es hier zu keiner Kristallisation kommt.

Fig. 3: Lichtmikroskopische Aufnahme eines nicht ausgewaschenen Films aus substituiertem Poly(3,4-alkylendioxythiophen) hergestellt aus den Verbindungen (II-a-1) und (II-b-1) (Beispiel 3)

Fig. 4: Lichtmikroskopische Aufnahme eines nicht ausgewaschenen Films aus Poly(3,4-ethylendioxythiophen) (Beispiel 3)

## Patentansprüche

1. Elektrolytkondensator enthaltend
eine Schicht eines oxidierbaren Metalls,
eine Oxidschicht dieses Metalls,
einen Feststoffelektrolyten und
Kontakte,
**dadurch gekennzeichnet, dass** er als Feststoffelektrolyt Polythiophene mit wiederkehrenden Einheiten der allgemeinen Formel (I) enthält, 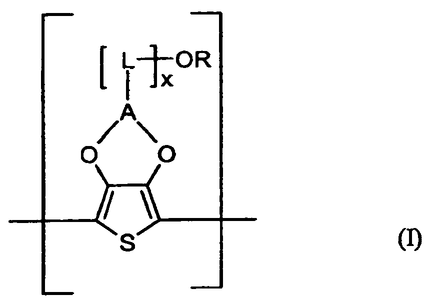 worin
A für einen C₁-C₅-Alkylenrest steht, der an beliebiger Stelle, gegebenenfalls über einen Linker L, durch eine Gruppe -OR substituiert ist und gegebenenfalls weitere Substituenten trägt,
L für eine Methylengruppe,
x für 0 oder eine ganze Zahl von 1 und größer steht und
R für H, gegebenenfalls zusätzlich durch SO₃H oder SO₃⁻ substituiertes C₁-C₁₈-Alkyl, C₇-C₁₈-Aralkyl, C₅-C₁₄-Aryl oder C₅-C₁₂-Cycloalkyl steht.

2. Elektrolytkondensator gemäß Anspruch 1, **dadurch gekennzeichnet, dass** x für für 0 oder 1 steht.

3. Elektrolytkondensator gemäß Anspruch 1 oder 2, **dadurch gekennzeichnet, dass** er als Feststoffelektrolyt Polythiophene mit wiederkehrenden Einheiten der allgemeinen Formeln (I-a) und/oder (I-b) enthält, 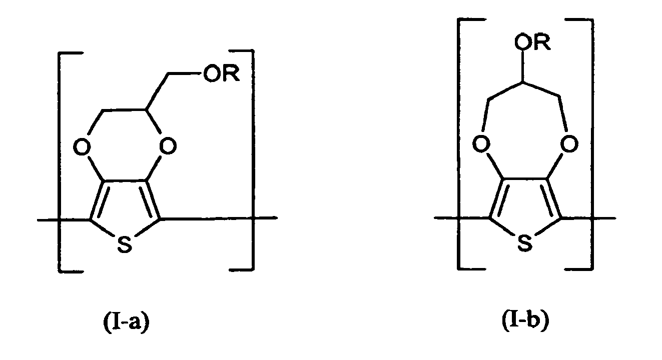 worin
R die in Anspruch 1 genannte Bedeutung hat.

4. Elektrolytkondensator gemäß Anspruch 3, **dadurch gekennzeichnet, dass** er als Feststoffelektrolyt Polythiophene mit wiederkehrenden Einheiten der allgemeinen Formeln (I-a) und/oder (I-b) enthält, worin R für H steht.

5. Elektrolytkondensator gemäß wenigstens einem der Ansprüche 1 bis 4, **dadurch gekennzeichnet, dass** es sich bei dem oxidierbaren Metall um ein Ventilmetall oder eine Verbindung mit vergleichbaren Eigenschaften handelt.

6. Elektrolytkondensator gemäß Anspruch 5, **dadurch gekennzeichnet, dass** es sich bei dem Ventilmetall oder der Verbindung mit vergleichbaren Eigenschaften um Tantal, Niob, Aluminium, Titan, Zirkon, Hafnium, Vanadium, eine Legierung oder Verbindung von wenigstens einem dieser Metalle mit anderen Elementen, NbO oder eine Legierung oder Verbindung von NbO mit anderen Elementen handelt.

7. Verfahren zur Herstellung eines Elektrolytkondensators gemäß wenigstens einem der Ansprüche 1 bis 6, **dadurch gekennzeichnet, dass** Verbindungen der allgemeinen Formel (II) oder ein Gemisch aus Verbindungen der allgemeinen Formel (II), 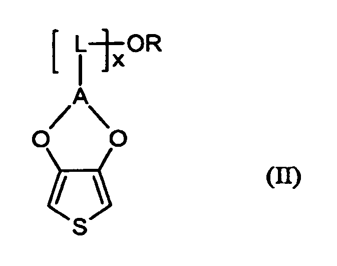 worin
A, L, x und R die in wenigstens einem der Ansprüche 1 bis 4 genannte Bedeutung haben,
ein Oxidationsmittel und gegebenenfalls Gegenionen, zusammen oder nacheinander gegebenenfalls in Form von Lösungen, auf eine Oxidschicht eines Metalls aufgebracht und chemisch zu den Polythiophenen mit wiederkehrenden Einheiten der allgemeinen Formel (I), 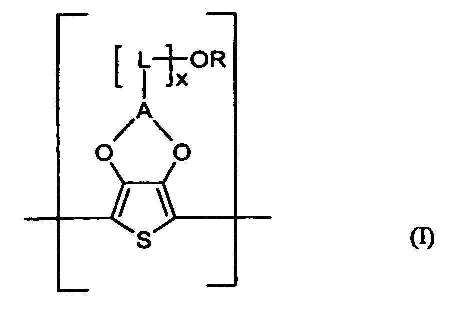 worin
A, L, x und R die in wenigstens einem der Ansprüche 1 bis 4 genannte Bedeutung haben,
bei Temperaturen von -10°C bis 250°C polymerisiert werden.

8. Verfahren zur Herstellung eines Elektrolytkondensators gemäß wenigstens einem der Ansprüche 1 bis 6, **dadurch gekennzeichnet, dass** Verbindungen der allgemeinen Formel (II) oder ein Gemisch aus Verbindungen der allgemeinen Formel (II), 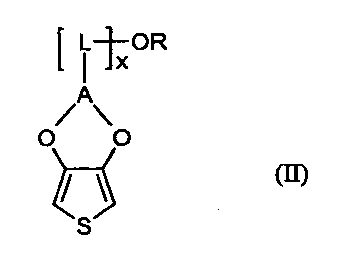 worin
A, L, x und R die in wenigstens einem der Ansprüche 1 bis 4 genannte Bedeutung haben,
und Gegenionen gegebenenfalls aus Lösung durch elektrochemische Polymerisation zu den Polythiophenen mit wiederkehrenden Einheiten der allgemeinen Formel (I), 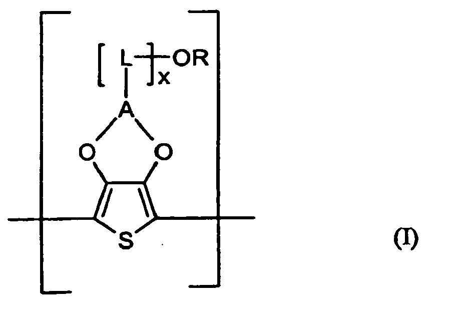 worin
A, L, x und R die in wenigstens einem der Ansprüche 1 bis 4 genannte Bedeutung haben,
bei Temperaturen von -78°C bis 250°C auf eine Oxidschicht eines Metalls aufgebracht werden.

9. Verfahren gemäß Anspruch 7, **dadurch gekennzeichnet, dass** als Oxidationsmittel Alkali- oder Ammoniumperoxodisulfate, Wasserstoffperoxid, Alkaliperborate, Eisen-III-salze organischer Säuren, Eisen-III-salze anorganischer Säuren oder Eisen-III-salze anorganischer Säuren, welche organische Reste aufweisen, verwendet werden.

10. Verfahren gemäß wenigstens einem der Ansprüche 7 bis 9, **dadurch gekennzeichnet, dass** die Lösungen zusätzlich einen oder mehrere Binder, Vernetzer und/oder Additive enthalten.

11. Verfahren gemäß wenigstens einem der Ansprüche 7 bis 10, **dadurch gekennzeichnet, dass** es sich bei den Gegenionen um Anionen von monomeren oder polymeren Alkan- oder Cycloalkansulfonsäuren oder aromatischen Sulfonsäuren handelt.

12. Verfahren gemäß wenigstens einem der Ansprüche 7 bis 11, **dadurch gekennzeichnet, dass** die die Polythiophene enthaltende Schicht (Elektrolytschicht) nach der Polymerisation und gegebenenfalls nach Trocknung mit geeigneten Lösungsmitteln gewaschen wird, um überschüssiges Oxidationsmittel und Restsalze zu entfernen.

13. Verwendung von Polythiophenen mit wiederkehrenden Einheiten der allgemeinen Formel (I), 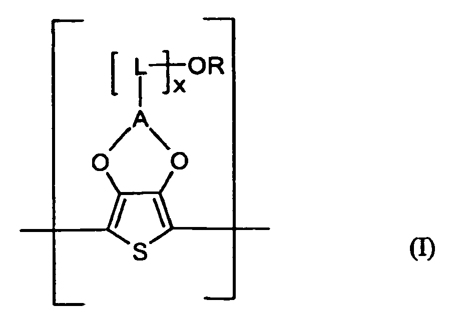 worin
A, L, x und R die in wenigstens einem der Ansprüche 1 bis 4 genannte Bedeutung haben,
als Feststoffelektrolyte in Elektrolyt-Kondensatoren.

14. Verwendung gemäß Anspruch 13 in Elektrolyt-Kondensatoren, welche als oxidierbares Metall ein Ventilmetall oder eine Verbindung mit vergleichbaren Eigenschaften enthalten.

15. Verwendung gemäß Anspruch 14 in Elektrolyt-Kondensatoren, worin das Ventilmetall oder die Verbindung mit vergleichbaren Eigenschaften Tantal, Niob, Aluminium, Titan, Zirkon, Hafnium, Vanadium, eine Legierung oder Verbindung von wenigstens einem dieser Metalle mit anderen Elementen, NbO oder eine Legierung oder Verbindung von NbO mit anderen Elementen ist.

16. Verfahren zur Herstellung elektrisch leitfähiger Schichten mit einer spezifischen Leitfähigkeit von mindestens 150 S/cm, **dadurch gekennzeichnet, dass** Verbindungen der allgemeinen Formel (II) oder ein Gemisch aus Verbindungen der allgemeinen Formel (II), 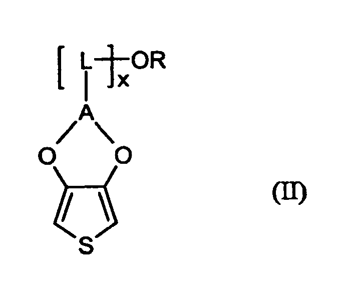 worin
A, L, x und R die in Anspruch 1 oder 2 genannte Bedeutung haben,
ein Oxidationsmittel und gegebenenfalls Gegenionen, zusammen oder nacheinander gegebenenfalls in Form von Lösungen, auf eine Unterlage aufgebracht und auf dieser Unterlage chemisch zu den Polythiophenen der allgemeinen Formel (I), 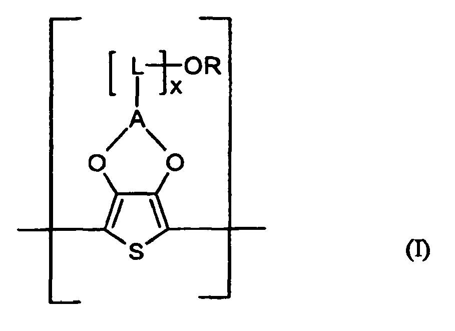 worin
A, L, x und R die in Anspruch 1 oder 2 genannte Bedeutung haben,
bei Temperaturen von -10°C bis 250°C polymerisiert werden und dass die elektrisch leitfähige Schicht nach der Polymerisation und gegebenenfalls nach Trocknung mit geeigneten Lösungsmitteln gewaschen wird, um überschüssiges Oxidationsmittel und Restsalze zu entfernen..

17. Verfahren zur Herstellung elektrisch leitfähiger Schichten mit einer spezifischen Leitfähigkeit von mindestens 150 S/cm, **dadurch gekennzeichnet, dass** Verbindungen der allgemeinen Formel (II) oder ein Gemisch aus Verbindungen der allgemeinen Formel (II), 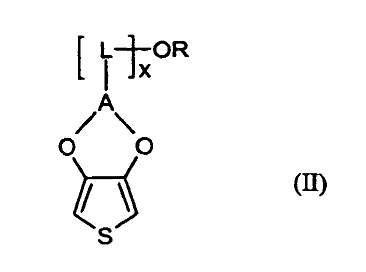 worin
A, L, x und R die in Anspruch 1 oder 2 genannte Bedeutung haben,
und Gegenionen gegebenenfalls aus Lösung durch elektrochemische Polymerisation zu den Polythiophenen mit wiederkehrenden Einheiten der allgemeinen Formel (I), 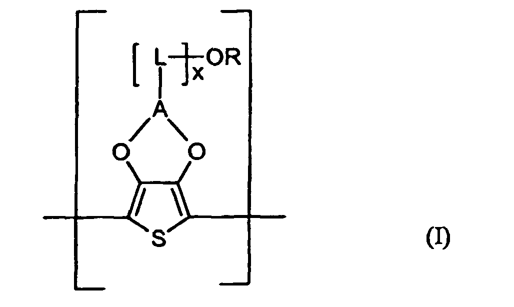 worin
A, L, x und R die in Anspruch 1 oder 2 genannte Bedeutung haben,
bei Temperaturen von -78°C bis 250°C auf eine Unterlage aufgebracht werden.

18. Verfahren gemäß Anspruch 16 oder 17, **dadurch gekennzeichnet, dass** als Verbindungen der allgemeinen Formel (II) oder als Gemisch aus Verbindungen der allgemeinen Formel (II) Thiophene der Formel (II-a) oder (II-b) oder ein Gemisch der Thiophene (II-a) und (II-b), 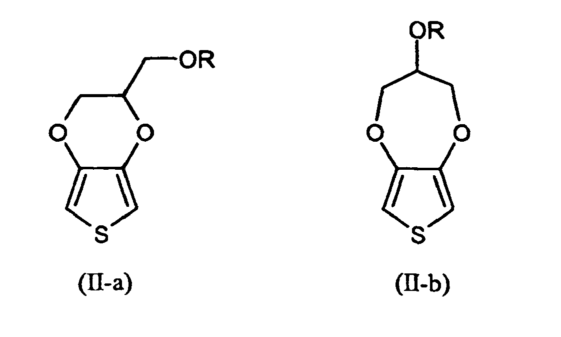 worin
R die in Anspruch 1 genannte Bedeutung hat,
verwendet werden.

19. Verfahren gemäß Anspruch 18, **dadurch gekennzeichnet, dass** R gleich H ist.

20. Verfahren gemäß wenigstens einem der Ansprüche 16 bis 19, **dadurch gekennzeichnet, dass** als Oxidationsmittel Alkali- oder Ammoniumperoxodisulfate, Wasserstoffperoxid, Perborate, Eisen-III-salze organischer Säuren, Eisen-III-salze anorganischer Säuren oder Eisen-III-salze anorganischer Säuren, welche organische Reste aufweisen, verwendet werden.

21. Verfahren gemäß wenigstens einem der Ansprüche 16 bis 20, **dadurch gekennzeichnet, dass** die Lösungen zusätzlich einen oder mehrere Binder, Vernetzer und/oder Additive enthalten.

22. Verfahren gemäß wenigstens einem der Ansprüche 16 bis 21, **dadurch gekennzeichnet, dass** es sich bei den Gegenionen um Anionen von monomeren oder polymeren Alkan- oder Cycloalkansulfonsäuren oder aromatischen Sulfonsäuren handelt.

23. Elektrisch leitfähige Schicht mit einer spezifischen Leitfähigkeit von mindestens 150 S/cm erhältlich durch ein Verfahren gemäß wenigsten einem der Ansprüche 16 bis 22.

24. Elektrisch leitfähige Schicht gemäß Anspruch 23, **dadurch gekennzeichnet, dass** sie transparent ist.

25. Verwendung von elektrisch leitfähigen Schichten gemäß Anspruch 23 oder 24 als antistatische Beschichtung, als transparente Heizung, als gegebenenfalls transparente Elektroden, als lochinjizierende oder lochleitende Schichten in organischen Leuchtdioden, zur Durchkontaktierung von Leiterplatten oder als Feststoffelektrolyt in Elektrolytkondensatoren.

## Claims

1. Electrolytic capacitor comprising
a layer of an oxidisable metal,
an oxide layer of that metal,
a solid electrolyte and
contacts,
**characterised in that** it contains as the solid electrolyte polythiophenes having repeated units of the general formula (I) 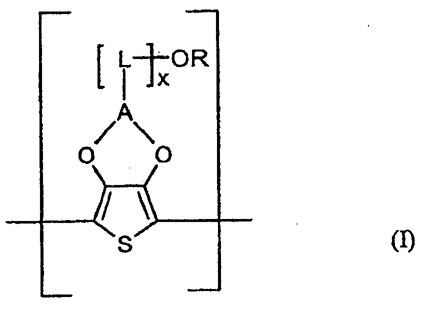 wherein
A represents a C₁-C₅-alkylene radical that is substituted in any desired position, optionally via a linker L, by a group -OR and that optionally carries further substituents,
L represents a methylene group,
x represents 0 or an integer of 1 and above, and
R represents H, optionally additionally SO₃H- or SO₃⁻-substituted C₁-C₁₈-alkyl, C₇-C₁₈-aralkyl, C₅-C₁₄-aryl or C₅-C₁₂-cycloalkyl.

2. Electrolytic capacitor according to claim 1, **characterised in that** x represents 0 or 1.

3. Electrolytic capacitor according to claim 1 or 2, **characterised in that** it contains as the solid electrolyte polythiophenes having repeating units of the general formulae (I-a) and/or (I-b) 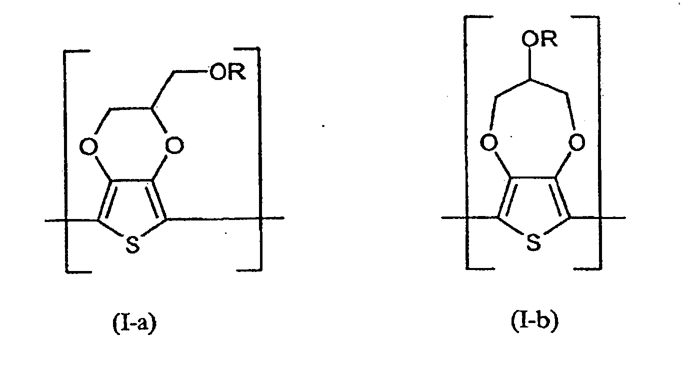 wherein
R is as defined in claim 1.

4. Electrolytic capacitor according to claim 3, **characterised in that** it contains as the solid electrolyte polythiophenes having repeating units of the general formulae (I-a) and/or (I-b) wherein R represents H.

5. Electrolytic capacitor according to at least one of claims 1 to 4, **characterised in that** the oxidisable metal is a valve metal or a compound having comparable properties.

6. Electrolytic capacitor according to claim 5, **characterised in that** the valve metal or the compound having comparable properties is tantalum, niobium, aluminium, titanium, zirconium, hafnium, vanadium, an alloy or compound of at least one of those metals with other elements, NbO, or an alloy or compound of NbO with other elements.

7. Process for the production of an electrolytic capacitor according to at least one of claims 1 to 6, **characterised in that** compounds of the general formula (II) or a mixture of compounds of the general formula (II) 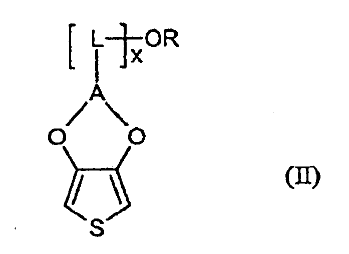 wherein
A, L, x and R are as defined in at least one of claims 1 to 4,
an oxidising agent and optionally counterions are applied, together or in succession, optionally in the form of solutions, to an oxide layer of a metal and are polymerised chemically at temperatures of from -10°C to 250°C to give the polythiophenes having repeating units of the general formula (I) 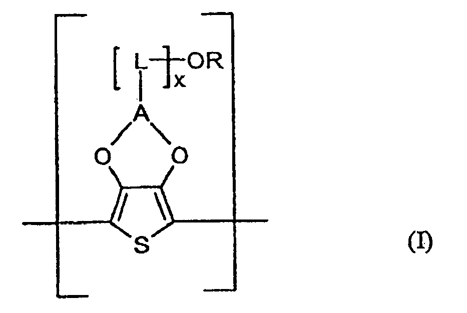 wherein
A, L, x and R are as defined in at least one of claims 1 to 4.

8. Process for the production of an electrolytic capacitor according to at least one of claims 1 to 6, **characterised in that** compounds of the general formula (II) or a mixture of compounds of the general formula (II) 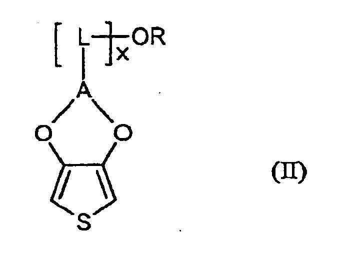 wherein
A, L, x and R are as defined in at least one of claims 1 to 4,
and counterions are applied, optionally from solution, by electrochemical polymerisation, at temperatures of from -78°C to 250°C, to an oxide layer of a metal to give the polythiophenes having repeating units of the general formula (I) 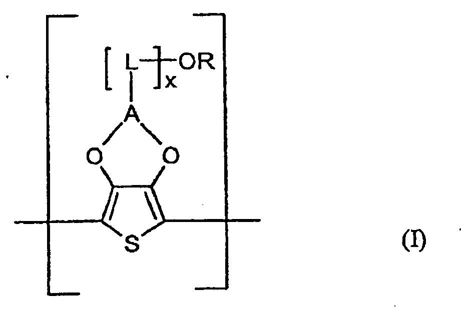 wherein
A, L, x and R are as defined in at least one of claims 1 to 4.

9. Process according to claim 7, **characterised in that** there are used as the oxidising agent alkali or ammonium peroxodisulfates, hydrogen peroxide, alkali perborates, iron(III) salts of organic acids, iron(III) salts of inorganic acids or iron(III) salts of inorganic acids having organic radicals.

10. Process according to at least one of claims 7 to 9, **characterised in that** the solutions additionally contain one or more binders, crosslinkers and/or additives.

11. Process according to at least one of claims 7 to 10, **characterised in that** the counterions are anions of monomeric or polymeric alkane- or cycloalkane-sulfonic acids or aromatic sulfonic acids.

12. Process according to at least one of claims 7 to 11, **characterised in that**, after the polymerisation and optionally after drying, the layer containing the polythiophenes (electrolyte layer) is washed with suitable solvents in order to remove excess oxidising agent and residual salts.

13. Use of polythiophenes having repeating units of the general formula (I) 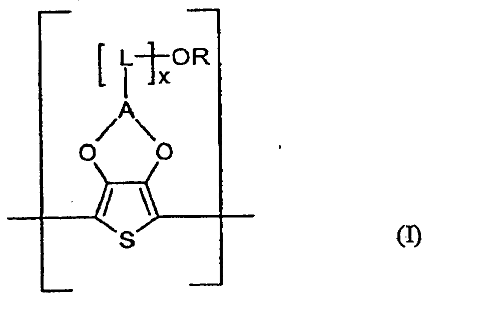 wherein
A, L, x and R are as defined in at least one of claims 1 to 4,
as solid electrolytes in electrolytic capacitors.

14. Use according to claim 13 in electrolytic capacitors which contain as the oxidisable metal a valve metal or a compound having comparable properties.

15. Use according to claim 14 in electrolytic capacitors, wherein the valve metal or the compound having comparable properties is tantalum, niobium, aluminium, titanium, zirconium, hafnium, vanadium; an alloy or compound of at least one of those metals with other elements, NbO, or an alloy or compound of NbO with other elements.

16. Process for the production of electrically conductive layers having a specific conductivity of at least 150 S/cm, **characterised in that** compounds of the general formula (II) or a mixture of compounds of the general formula (II) 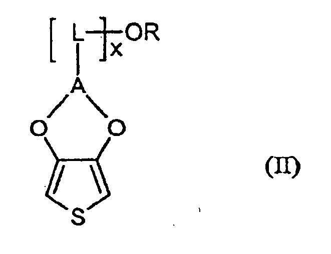 wherein
A, L, x and R are as defined in claim 1 or 2,
an oxidising agent and optionally counterions are applied, together or in succession, optionally in the form of solutions, to a substrate and are polymerised chemically on the substrate at temperatures of from -10°C to 250°C to give the polythiophenes of the general formula (I) 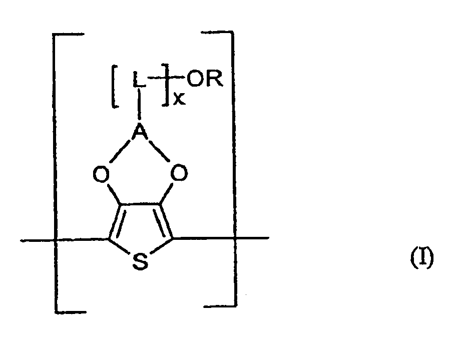 wherein
A, L, x and R are as defined in claim 1 or 2,
and **in that**, after the polymerisation and optionally after drying, the electrically conductive layer is washed with suitable solvents in order to remove excess oxidising agent and residual salts.

17. Process for the production of electrically conductive layers having a specific conductivity of at least 150 S/cm, **characterised in that** compounds of the general formula (II) or a mixture of compounds of the general formula (II) 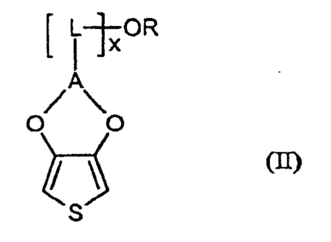 wherein
A, L, x and R are as defined in claim 1 or 2,
and counterions are applied, optionally from solution, by electrochemical polymerisation, at temperatures of from -78°C to 250°C, to a substrate to give the polythiophenes having repeating units of the general formula (I) 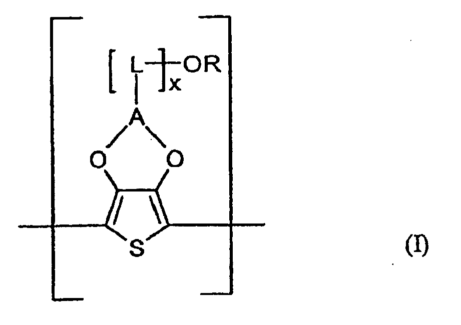 wherein
A, L, x and R are as defined in claim 1 or 2.

18. Process according to claim 16 or 17, **characterised in that** there are used as the compounds of the general formula (II) or as the mixture of compounds of the general formula (II) thiophenes of formula (II-a) or (II-b) or a mixture of the thiophenes (II-a) and (II-b) 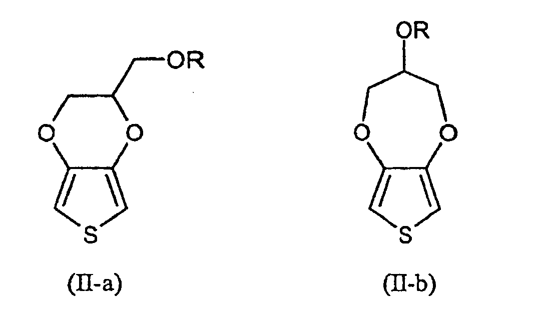 wherein
R is as defined in claim 1.

19. Process according to claim 18, **characterised in that** R is H.

20. Process according to at least one of claims 16 to 19, **characterised in that** there is used as the oxidising agent alkali or ammonium peroxodisulfates, hydrogen peroxide, perborates, iron(III) salts of organic acids, iron(III) salts of inorganic acids or iron(III) salts of inorganic acids having organic radicals.

21. Process according to at least one of claims 16 to 20, **characterised in that** the solutions additionally contain one or more binders, crosslinkers and/or additives.

22. Process according to at least one of claims 16 to 21, **characterised in that** the counterions are anions of monomeric or polymeric alkane- or cycloalkane-sulfonic acids or aromatic sulfonic acids.

23. Electrically conductive layer having a specific conductivity of at least 150 S/cm, obtainable by a process according to at least one of claims 16 to 22.

24. Electrically conductive layer according to claim 23, **characterised in that** it is transparent.

25. Use of electrically conductive layers according to claim 23 or 24 as an anti-static coating, as transparent heating, as optionally transparent electrodes, as hole-injecting or hole-conducting layers in organic light-emitting diodes, for the throughplating of printed circuit boards or as a solid electrolyte in electrolytic capacitors.

## Revendications

1. Condensateur électrolytique contenant
une couche d'un métal oxydable,
une couche d'oxyde de ce métal,
un électrolyte solide, et
des contacts,
**caractérisé en ce qu'**il contient comme électrolyte solide des polythiophènes ayant des motifs récurrents de formule générale (I), 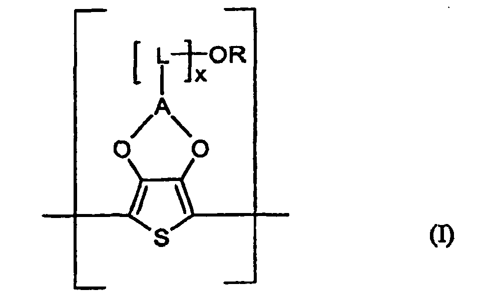 dans laquelle
A représente un radical alkylène en C₁ à C₅, qui est substitué en un endroit quelconque par un groupe -OR le cas échéant par le biais d'un lieur L et qui porte le cas échéant d'autres substituants,
L représente un groupe méthylène,
x représente 0 ou un nombre entier de 1 et plus, et
R représente H, alkyle en C₁ à C₁₈, aralkyle en C₇ à C₁₈, aryle en C₅ à C₁₄ ou cycloalkyle en C₅ à C₁₂, le cas échéant en plus substitué par SO₃H ou SO₃⁻.

2. Condensateur électrolytique selon la revendication 1, **caractérisé en ce que** x représente 0 ou 1.

3. Condensateur électrolytique selon la revendication 1 ou 2, **caractérisé en ce qu'**il contient comme électrolyte solide des polythiophènes ayant des motifs récurrents de formules générales (I-a) et/ou (I-b), 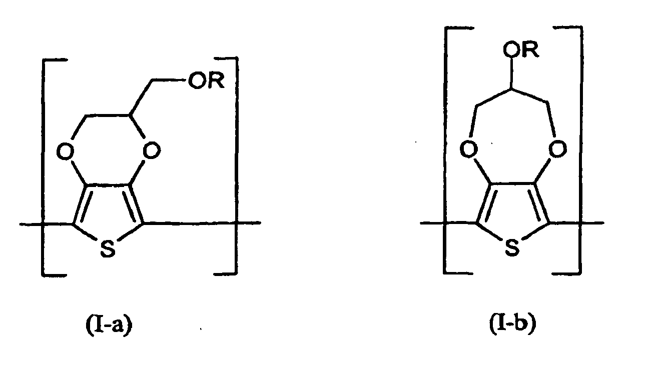 dans laquelle
R a la signification citée dans la revendication 1.

4. Condensateur électrolytique selon la revendication 3, **caractérisé en ce qu'**il contient comme électrolyte solide des polythiophènes ayant des motifs récurrents de formules générales (I-a) et/ou (I-b), dans laquelle R représente H.

5. Condensateur électrolytique selon au moins l'une des revendications 1 à 4, **caractérisé en ce que** le métal oxydable est un métal valve ou un composé ayant des propriétés comparables.

6. Condensateur électrolytique selon la revendication 5, **caractérisé en ce que** le métal valve ou le composé ayant des propriétés comparables est le tantale, le niobium, l'aluminium, le titane, le zircone, le hafnium, le vanadium, un alliage ou un composé d'au moins un de ces métaux avec d'autres éléments, NbO ou un alliage ou un composé de NbO avec d'autres éléments.

7. Procédé de fabrication d'un condensateur électrolytique selon au moins une des revendications 1 à 6, **caractérisé en ce que** des composés de formule générale (II) ou un mélange des composés de formule générale (II), 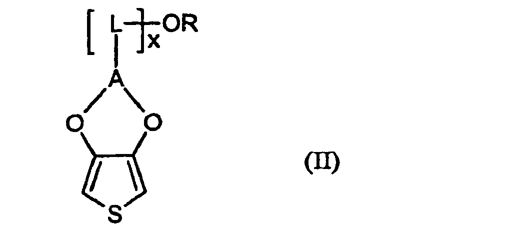 dans laquelle
A, L, x et R ont la signification citée dans au moins une des revendications 1 à 4,
un agent d'oxydation et le cas échéant des contre-ions sont déposés conjointement ou successivement, le cas échéant sous forme de solutions, sur une couche d'oxyde d'un métal et sont polymérisés chimiquement en polythiophènes ayant des motifs récurrents de formule générale (1), 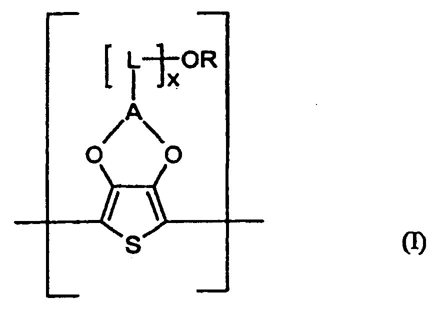 dans laquelle
A, L, x et R ont la signification citée au dans moins une des revendications 1 à 4,
à des températures de -10°C à 250°C.

8. Procédé de fabrication d'un condensateur électrolytique selon au moins l'une des revendications 1 à 6, **caractérisé en ce que** des composés de formule générale (II) ou un mélange des composés de formule générale (II), 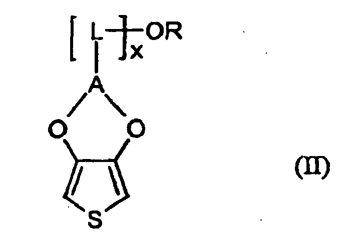 dans laquelle
A, L, x et R ont la signification citée dans au moins une des revendications 1 à 4,
et des contre-ions sont déposés le cas échéant à partir de solution par polymérisation électrochimique en polythiophènes ayant des motifs récurrents de formule générale (I), 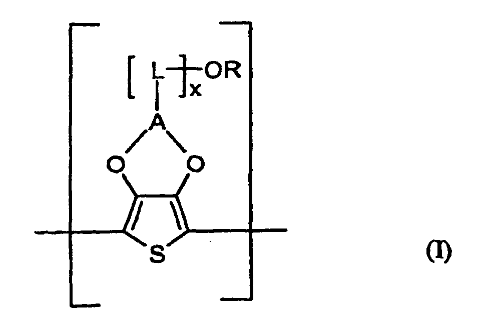 dans laquelle
A, L, x et R ont la signification citée dans au moins une des revendications 1 à 4,
à des températures de -78°C à 250°C sur une couche d'oxyde d'un métal.

9. Procédé selon la revendication 7, **caractérisé en ce que** l'on utilise comme agent d'oxydation des peroxodisulfates d'alcalin ou d'ammonium, du peroxyde d'hydrogène, des perborates alcalins, des sels de fer-III d'acides organiques, des sels de fer-III d'acides inorganiques ou des sels de fer-III d'acides inorganiques qui présentent des radicaux organiques.

10. Procédé selon au moins l'une des revendications 7 à 9, **caractérisé en ce que** les solutions contiennent en plus un ou plusieurs liants, réticulants et/ou additifs.

11. Procédé selon au moins l'une des revendications 7 à 10, **caractérisé en ce que** les contre-ions sont des anions d'acides alcane- ou cycloalcanesulfoniques monomères ou polymères ou d'acides sulfoniques aromatiques.

12. Procédé selon au moins l'une des revendications 7 à 11, **caractérisé en ce que** la couche contenant les polythiophènes (couche électrolytique) est lavée après polymérisation et le cas échéant après séchage avec des solvants appropriés pour éliminer l'agent d'oxydation excédentaire et les sels résiduels.

13. Utilisation des polythiophènes ayant des motifs récurrents de formule générale (I), 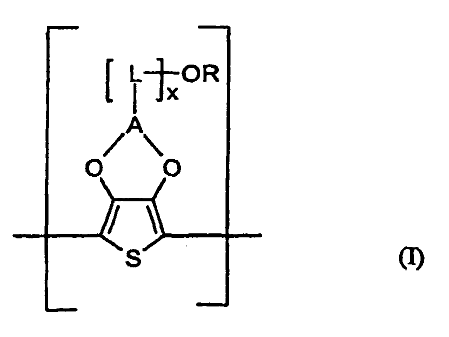 dans laquelle
A, L, x et R ont la signification citée dans au moins une des revendications 1 à 4,
comme électrolytes solides dans des condensateurs électrolytiques.

14. Utilisation selon la revendication 13 dans des condensateurs électrolytiques qui contiennent comme métal oxydable un métal valve ou un composé ayant des propriétés comparables.

15. Utilisation selon la revendication 14 dans des condensateurs électrolytiques, dans laquelle le métal valve ou le composé ayant des propriétés comparables est le tantale, le niobium, l'aluminium, le titane, le zircone, le hafnium, le vanadium, un alliage ou un composé d'au moins l'un de ces métaux avec d'autres éléments, NbO ou un alliage ou un composé de NbO avec d'autres éléments.

16. Procédé de fabrication de couches électriquement conductrices ayant une conductivité spécifique d'au moins 150 S/cm, **caractérisé en ce que** des composés de formule générale (II) ou un mélange des composés de formule générale (II), 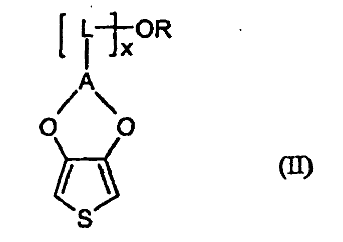 dans laquelle
A, L, x et R ont la signification citée dans la revendication 1 ou 2,
un agent d'oxydation et le cas échéant des contre-ions sont déposés conjointement ou successivement, le cas échéant sous forme de solutions, sur une sous-couche et sont polymérisés chimiquement sur cette sous-couche en polythiophènes de formule générale (I), 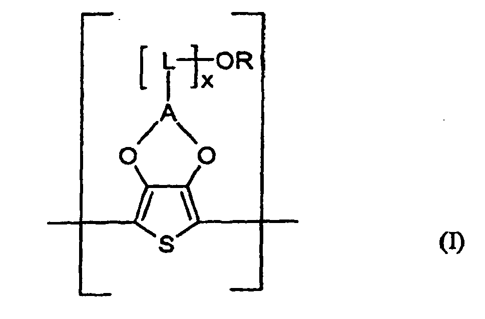 dans laquelle
A, L, x et R ont la signification citée dans la revendication 1 ou 2,
à des températures de -10°C à 250°C et **en ce que** la couche électriquement conductrice est lavée après polymérisation et le cas échéant après séchage avec des solvants appropriés pour éliminer l'agent d'oxydation excédentaire et les sels résiduels.

17. Procédé de fabrication de couches électriquement conductrices ayant une conductivité spécifique d'au moins 150 S/cm, **caractérisé en ce que** des composés de formule générale (II) ou un mélange des composés de formule générale (II), 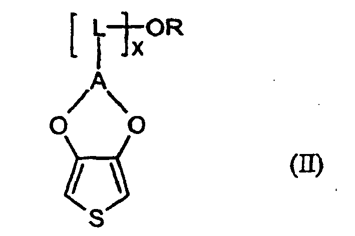 dans laquelle
A, L, x et R ont la signification citée dans la revendication 1 ou 2,
des contre-ions sont déposés, le cas échéant à partir de solution, par polymérisation électrochimique en polythiophènes ayant des motifs récurrents de formule générale (I), 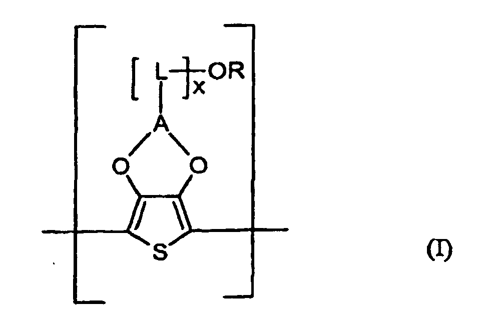 dans laquelle
A, L, x et R ont la signification citée dans la revendication 1 ou 2,
à des températures de -78°C à 250°C sur une sous-couche.

18. Procédé selon la revendication 16 ou 17, **caractérisé en ce que** l'on utilise comme composés de formule générale (II) ou comme mélange de composés de formule générale (II) des thiophènes de formule (II-a) ou (II-b) ou un mélange des thiophènes (II-a) et (II-b), 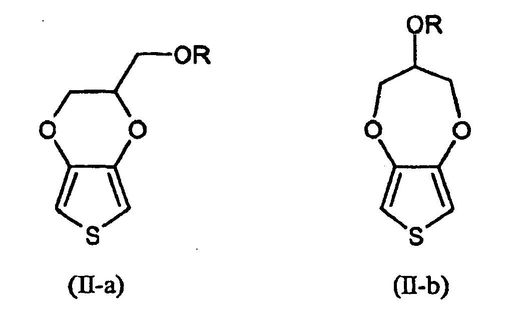 dans laquelle
R a la signification citée dans la revendication 1.

19. Procédé selon la revendication 18, **caractérisé en ce que** R est égal à H.

20. Procédé selon au moins l'une des revendications 16 à 19, **caractérisé en ce que** l'on utilise comme agents d'oxydation des peroxodisulfates d'alcalin ou d'ammonium, du peroxyde d'hydrogène, des perborates, des sels de fer-III d'acides organiques, des sels de fer-III d'acides inorganiques ou des sels de fer-III d'acides inorganiques qui présentent des radicaux organiques.

21. Procédé selon au moins l'une des revendications 16 à 20, **caractérisé en ce que** les solutions contiennent en plus un ou plusieurs liants, réticulants et/ou additifs.

22. Procédé selon au moins l'une des revendications 16 à 21, **caractérisé en ce que** les contre-ions sont des anions d'acides alcane- ou cycloalcanesulfoniques monomères ou polymères ou d'acides sulfoniques aromatiques.

23. Couche électriquement conductrice ayant une conductivité spécifique d'au moins 150 S/cm, pouvant être obtenue par un procédé selon au moins une des revendications 16 à 22.

24. Couche électriquement conductrice selon la revendication 23, **caractérisée en ce qu'**elle est transparente.

25. Utilisation des couches électriquement conductrices selon la revendication 23 ou 24 comme revêtement antistatique, comme chauffage transparent, comme électrodes le cas échéant transparentes, comme couches à injection de trous ou à transport de trous dans des diodes luminescentes organiques, pour la mise en contact des cartes de circuits imprimés ou comme électrolyte solide dans des condensateurs électrolytiques.
